# EUROPEAN PATENT APPLICATION

(11) **EP 1 217 329 A1**
(43) Date of publication of application: **26.06.2002**
(21) Application number: 00909693.4
(22) Date of filing: 17.03.2000
(51) Int. Cl.: G01C 9/18, G01C 9/06

(54) **ATTITUDE DETECTING DEVICE**

(30) Priority: 12.08.1999 WO PCT/JP99/04378; 12.08.1999 WO PCT/JP99/04379
(71) Applicant: Seiko Instruments Inc., Chiba-shi, Chiba-ken 261-0023 (JP)
(72) Inventor: WATANABE, Mamoru, Seiko Instruments Inc., Chiba-shi, Chiba 261-0023 (JP); JUJO, Koichiro, Seiko Instruments Inc., Chiba-shi, Chiba 261-0023 (JP); TOKORO, Takeshi, Seiko Instruments Inc., Chiba-shi, Chiba 261-0023 (JP)
(74) Representative: Sturt, Clifford Mark
(86) International application number: PCT/JP00/01626
(87) International publication number: WO 01/13064

(57) **Abstract**

An attitude sensor of the invention is characterized by including a case configured to have a shape seen from the top being circular and seen from the side including a curve, a plurality of patterns concentrically disposed on an inner surface of the case, and a conductive fluid housed in the aforesaid case. In one viewpoint of the invention, a case 610a is configured to have a shape seen form the side being oblong. Additionally, another viewpoint of the invention, a case 620a is configured to have a shape seen from the side being elliptic. Furthermore, still another viewpoint of the invention, a case 630a is configured to have an outside shape being spherical. Moreover, yet another viewpoint of the invention, a case 640a is configured to have a cross-sectional shape seen from the side being cocoon-shaped.

## Description

### Technical Field

The present invention relates to an attitude sensor for use in a machine, a device and the like capable of detecting the attitude thereof highly accurately.

### Background of the Invention

### (1) Orthodox Attitude Sensors

1) Japanese Patent Laid-Open No. 307805/1994 discloses an attitude sensor having a hollow outer spherical body and an inner spherical body fixed to the hollow part of the outer spherical body with a predetermined layer space in which a fluid conductive material is disposed between a first conductive area including a pattern disposed in the entire inner area of the outer spherical body and a second conductive area including a plurality of patterns spottedly disposed outside the inner spherical body. In this attitude sensor, the fluid conductive material can move inside the layer space between the first and second conductive areas. The attitude sensor is configured to be capable of detecting the attitude of an apparatus by conducting one of the patterns in the second conductive area to the pattern in the first conductive area.
2) Japanese Patent Laid-Open No. 159726/1983 discloses a posture detector in which six patterns are disposed on the inner surface of a case having a hexahedron shape to include a conductive fluid for connecting the patterns.
3) Japanese Patent Laid-Open No. 79117/1986 discloses a tilt angle detector having a container including a conductive fluid, the detector provided with at least three liquid level detection lines for detecting the liquid level of the conductive fluid.
4) Japanese Patent Laid-Open No. 120214/1988 discloses an angle sensor provided with a spherical hollow case, a plurality of contacts provided inside the case and a conductive fluid sealed in the case.

### (2) Structure of the Orthodox Mechanical Watch

Generally, an orthodox mechanical watch does not provided with an attitude sensor.

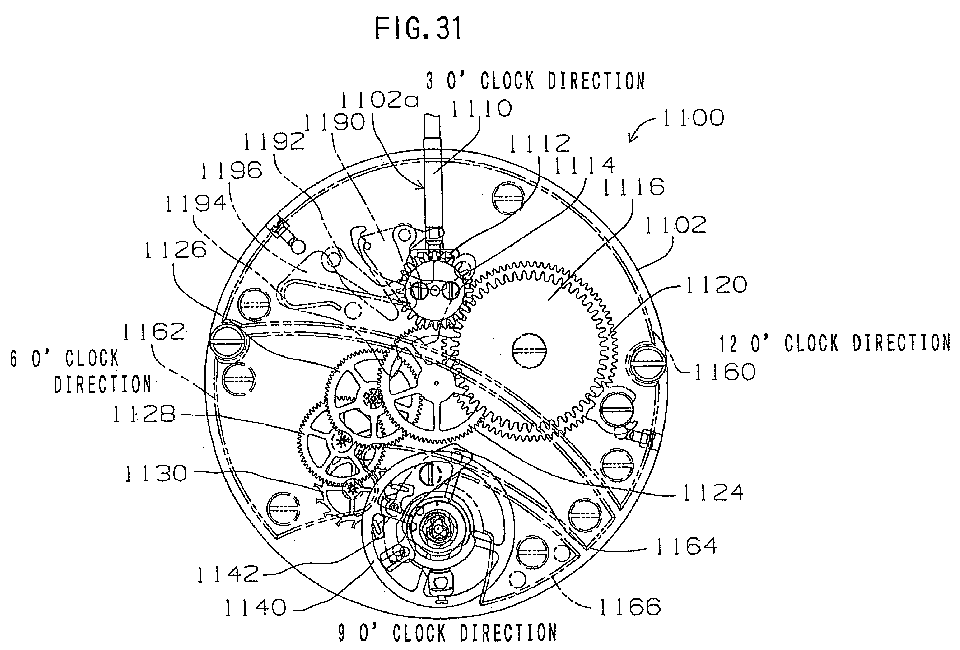

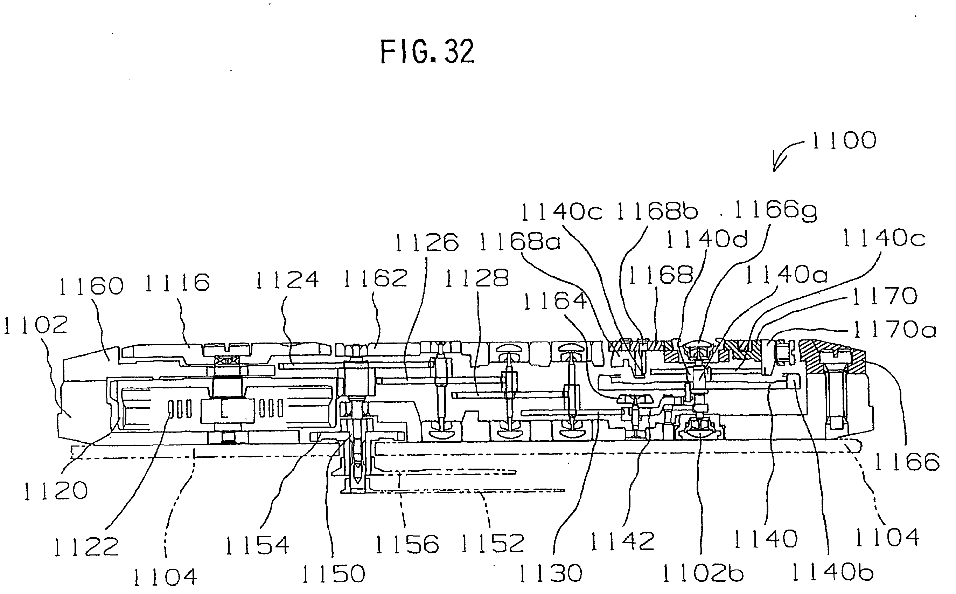

In such a typical orthodox mechanical watch, as shown in Figs. 31 and 32, a movement (mechanical body) 1100 of the mechanical watch has a main plate 1102 that constitutes a base plate of the movement. A winding stem 1110 is rotatably incorporated into a winding stem guide hole 1102a of the main plate 1102. A dial 1104 (it is indicated by imaginary lines in Fig. 32) is mounted on the movement 1100.

In the mechanical watch, when the state of the dial being mounted is assumed, a "flat attitude" where the dial becomes horizontal and an "erected attitude (vertical attitude)" where the dial becomes vertical are defined.

Additionally, in the mechanical watch, when the state of the dial being mounted is assumed, the direction from the center of the mechanical watch toward a twelve o'clock marker on the dial is called the "twelve o'clock direction", the direction from the center of the mechanical watch toward a 3 o'clock marker on the dial is called the "three o'clock direction", the direction from the center of the mechanical watch toward a six o'clock marker on the dial is called the "six o'clock direction" and the direction from the center of the mechanical watch toward a nine o'clock marker on the dial is called the "nine o'clock direction" (see Fig. 31).

Furthermore, in the mechanical watch, when the state of the dial being mounted and the dial being vertical is assumed, the attitude of the twelve o'clock marker on the dial being up is called as "the attitude of twelve o'clock up", the attitude of the three o'clock marker of the dial being up is called as the "attitude of three o'clock up", the attitude of the six o'clock marker of the dial being up is called as the "attitude of six o'clock up" and the attitude of the nine o'clock marker of the dial being up is called as the "attitude of nine o'clock up".

Then, in the mechanical watch, the mechanical watch has been manufactured in which the "rate" is measured on four erected attitudes of the "attitude of twelve o'clock up", the "attitude of three o'clock up", the "attitude of six o'clock up" and the "attitude of nine o'clock up" and the rate of the mechanical watch is adjusted so that the measured values of the respective "rates" satisfy predetermined specifications.

In the description below, the "rate when the mechanical watch is set in the attitude of twelve o'clock up" is called as the "rate of twelve up", the "rate when the mechanical watch is set in the attitude of three o'clock up" is called as the "rate of three up", "the rate when the mechanical watch is set in the attitude of six o'clock up" is called as the "rate of six up" and the "rate when the mechanical watch is set in the attitude of nine o'clock up" is called as the "rate of nine up".

Generally, in both sides of the main plate, the side where the dial is located is called as the "back side" of the movement and the side opposite of the side where the dial is located is called as the "front side" of the movement. A train to be incorporated into the "front side" of the movement is called as a "front train" and a train to be incorporated into the "back side" of the movement is called as a "back train".

The position in the axial direction of a winding stem 1110 is determined by a switch including a setting lever 1190, a yoke 1192, a yoke spring 1194 and a setting lever jumper 1196. A click wheel 1112 is rotatably disposed on the guide shaft part of the winding stem 1110. When the winding stem 1110 is rotated in the state that the winding stem 1110 is located at the first winding stem position (zero stage) that is closest to the inside of the movement along the rotational axis direction, the click wheel 1112 rotates through the rotation of a clutch wheel. A crown wheel 1114 rotates through the rotation of the click wheel 1112. A ratchet wheel 1116 rotates by the rotation of the crown wheel 1114. The ratchet wheel 1116 rotates and thereby a main spring 1122 housed in a spring barrel 1120 is wound up. A center wheel 1124 rotates by the rotation of the spring barrel 1120. An escape wheel and pinion 1130 rotates through the rotation of a fourth wheel and pinion 1128, a third wheel and pinion 1126 and the center wheel and pinion 1124. The spring barrel 1120, the center wheel and pinion 1124, the third wheel and pinion 1126 and the fourth wheel and pinion 1128 constitute the front wheel train.

An escapement and governor for controlling the rotation of the front wheel train includes a balance wheel 1140, the escape wheel and pinion 1130 and a pallet 1142. The balance wheel 1140 includes a balance staff 1140a, a balance wheel 1140b and a hair spring 1140c. A cannon pinion 1150 rotates at the same time based on the rotation of the center wheel and pinion 1124. A minute hand 1152 mounted on the cannon pinion 1150 indicates a "minute". The cannon pinion 1150 is provided with a slip mechanism for the center wheel and pinion 1124. An hour wheel 1154 rotates through the rotation of a minute wheel based on the rotation of the cannon pinion 1150. An hour hand 1156 mounted on the hour wheel 1154 indicates an "hour".

The spring barrel 1120 is rotatably supported with respect to the main plate 1102 and a barrel bridge 1160. The center wheel and pinion 1124, the third wheel and pinion 1126, the fourth wheel and pinion 1128 and the escape wheel and pinion 1130 are rotatably supported with respect to the main plate 1102 and a train bridge 1162. The pallet 1142 is rotatably supported with respect to the main plate 1102 and a pallet bridge 1164. The balance wheel 1140 is rotatably supported with respect to the main plate 1102 and a balance wheel bridge 1166.

The hair spring 1140c is a curled (spiral-shaped) thin plate spring having a plurality of turns. The inner end of the hair spring 1140c is fixed to a collet 1140d that is fixed to the balance staff 1140a and the outer end of the hair spring 1140c is fixed by screw clamping through a stud 1170a fixed to a stud bridge 1170 that is fixed to the balance wheel bridge 1166.

A regulator pin 1168 is rotatably mounted on the balance wheel bridge 1166. A hair spring bridge 1340 and a regulator pin 1342 are mounted on the regulator pin 1168. The portion of the hair spring 1140c close to the outer end thereof is located between the hair spring bridge 1340 and the regulator pin 1342.

### (3) Main Spring Torque and an Balance Wheel Swing Angle of the Orthodox Mechanical Watch

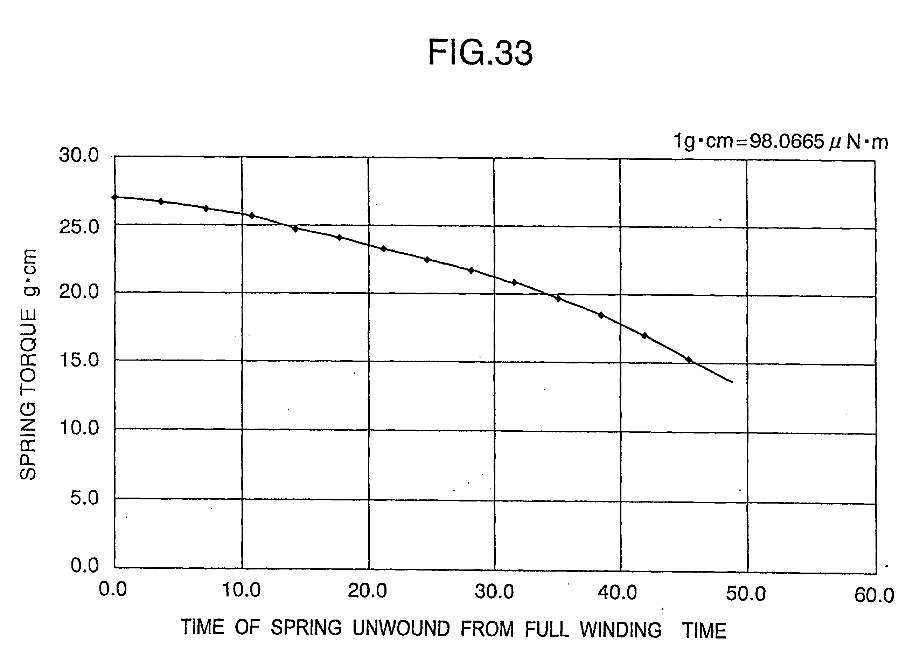

Generally, in the typical orthodox mechanical watch, as shown in Fig. 33, as the main spring is unwound from the state that the main spring has been wound completely (fully wound state) and the duration elapses, a main spring torque decreases. For instance, in the example shown in Fig. 33, a main spring torque is approximately 27 g·cm in the fully wound state. After 20 hours have passed from the fully wound state, it becomes approximately 23 g·cm. After 40 hours have passed from the fully wound state, it becomes approximately 18 g·cm.

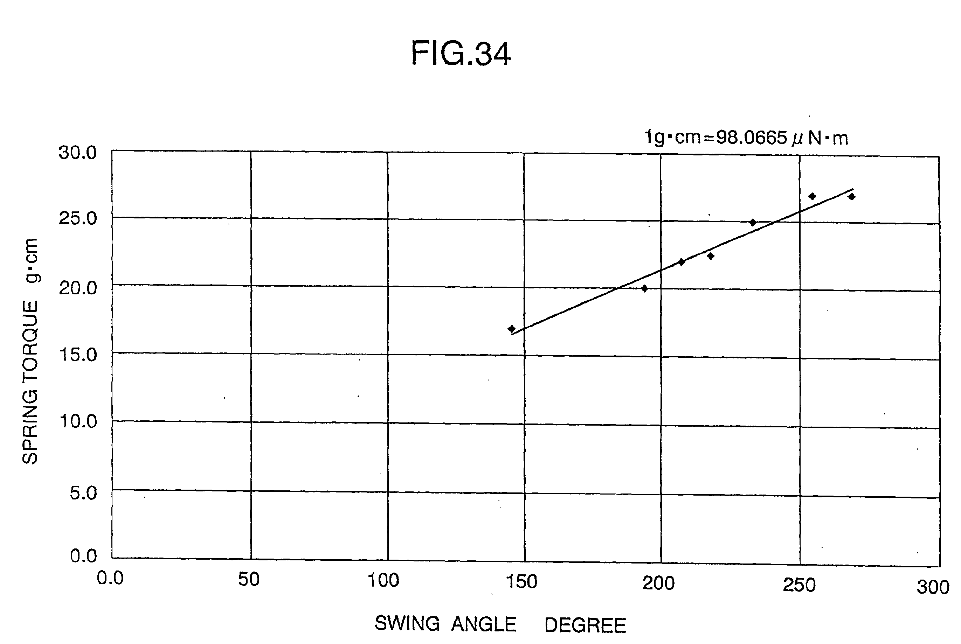

Generally, in the typical orthodox mechanical watch, as shown in Fig. 34, when a main spring torque decreases, a balance wheel swing angle also decreases. For instance, in the example shown in Fig. 34, when a main spring torque is 25 to 28 g·cm, the balance wheel swing angle is approximately 240 to 270 degrees. When a main spring torque is 20 to 25 g·cm, a balance wheel swing angle is approximately 180 to 240 degrees.

### (4) Instantaneous Rate of the Orthodox Mechanical Watch

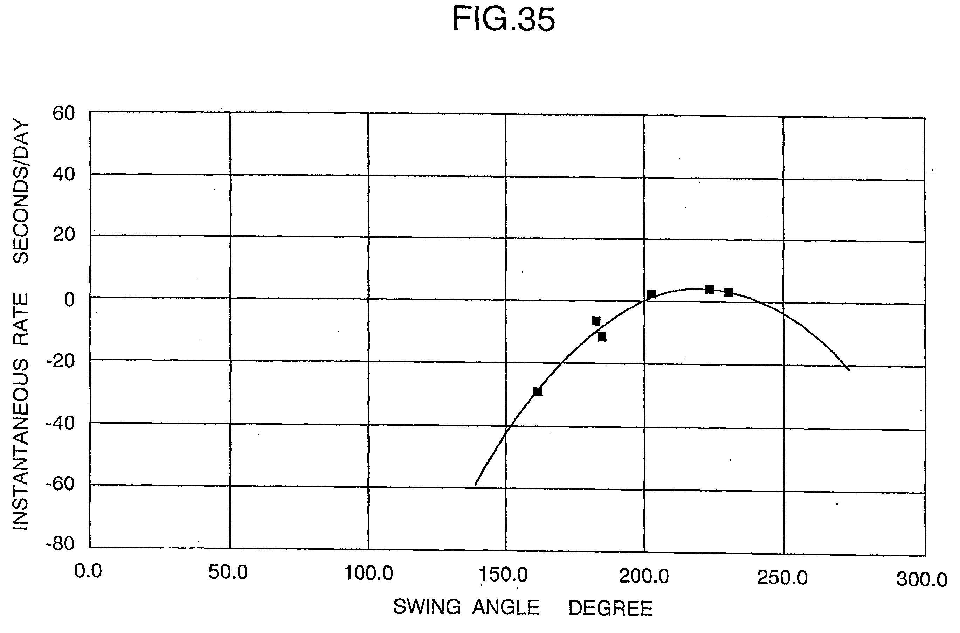

Referring to Fig. 35, in the typical orthodox mechanical watch, the transition of an instantaneous rate (a numerical value which indicates the accuracy of the watch) with respect to the balance wheel swing angle in the state of the mechanical watch being placed in the flat attitude is shown. Here, the "instantaneous rate" means "a value which indicates an advancement or a delay of the mechanical watch after one day has passed, assuming that the mechanical watch is left for one day with the state or the environment of the balance wheel swing angle or the like maintained when the rate was measured". In the example shown in Fig. 34, the instantaneous rate delays when the balance wheel swing angle is 240 degrees or more, or 200 degrees or under.

For instance, in the typical orthodox mechanical watch, as shown in Fig. 35, when the balance wheel swing angle is about 200 to 240 degrees, the instantaneous rate is about zero to five seconds/day (it advances about zero to five seconds per day). However, when the balance wheel swing angle is about 170 degrees, the instantaneous rate becomes about -20 seconds/day (it delays about 20 seconds per day).

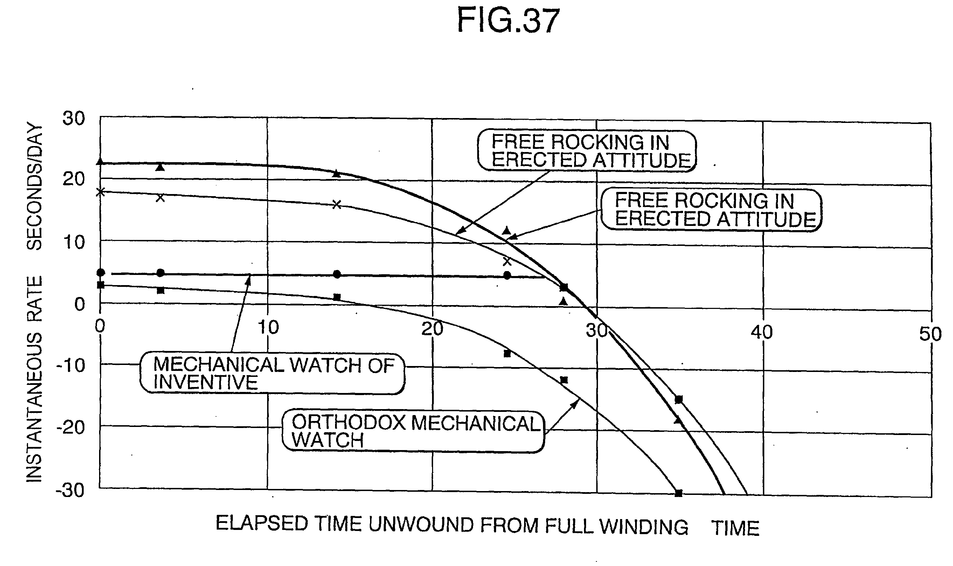

Referring to Fig. 37, the transition of elapsed time and the instantaneous rate is shown when the main spring is unwound from the fully wound state in the typical orthodox mechanical watch. Here, in the orthodox mechanical watch, the "rate" that indicate the advancement or the delay of the watch per day can be obtained by integrating the instantaneous rate over an amount for 24 hours with respect to the elapsed time for which the main spring has been unwound from the full winding, indicated by a thick line in Fig. 37.

Generally, in the orthodox mechanical watch, as the main spring is unwound from the fully wound state and the duration elapses, the spring torque decreases and the balance wheel swing angle also decreases and thus the instantaneous rate delays. On this account, the orthodox mechanical watch has been adjusted in advance in which the instantaneous rate when the main spring is in the fully wound state is advanced beforehand anticipating the delay of the watch after the duration has passed for 24 hours so that the "rate" that indicates the advancement or the delay of the watch per day becomes plus.

For instance, in the typical orthodox mechanical watch, as indicated by a thick in Fig. 37, the instantaneous rate is about five seconds/day (it advances about five seconds per day) in the fully wound state. However, after 20 hours have elapsed from the fully wound state, the instantaneous rate becomes about minus one second/day (it delays about 1 second per day). After 24 hours have elapsed from the fully wound state, the instantaneous rate becomes about minus five seconds/day (it delays about five seconds per day). After 30 hours have elapsed from the fully wound state, the instantaneous rate becomes about -15 seconds/day (it delays about 15 seconds per day).

### (5) Attitude and the Instantaneous Rate of the Orthodox Mechanical Watch

Additionally, in the typical orthodox mechanical watch, the instantaneous rate in the "flat attitude" and the "reverse flat attitude" is on the side more advanced than that in the "erected attitude".

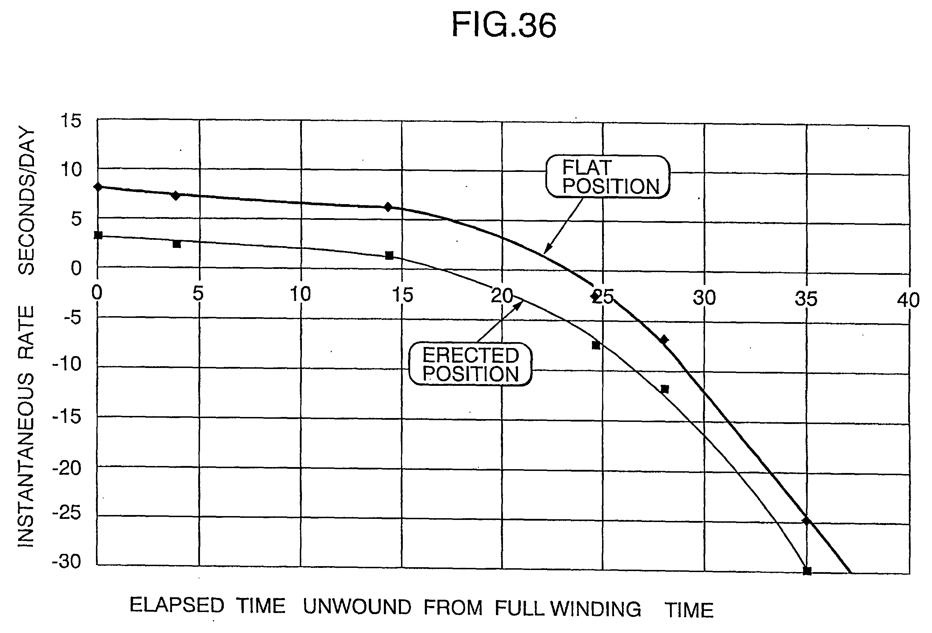

For instance, in the typical orthodox mechanical watch, when it is in the "flat attitude" and "reverse flat attitude", as indicated by a thick line in Fig. 36, an instantaneous rate is about eight seconds/day in the fully wound state (it advances about eight seconds per day). However, after 20 hours have elapsed from the fully wound state, the instantaneous rate becomes about three seconds/day (it advances about three seconds per day). After 24 hours have elapsed from the fully wound state, the instantaneous rate becomes about minus two seconds/day (it delays about two seconds per day). After 30 hours have elapsed from the fully wound state, the instantaneous rate becomes about -12 seconds/day after (it delays about 12 seconds per day).

In regard to this, in the typical orthodox mechanical watch, when it is in the "erected attitude", as indicated by a thin line in Fig. 36, an instantaneous rate is about three seconds/day (it advances about three seconds per day) in the fully wound state. After 20 hours have passed from the fully wound state, the instantaneous rate becomes about minus two seconds/day (it delays about two seconds per day). After 24 hours have elapsed from the fully wound state, the instantaneous rate becomes about minus seven seconds/day (it delays about seven seconds per day). After 30 hours have elapsed from the fully wound state, the instantaneous rate becomes about -17 seconds/day (it delays about 17 seconds per day).

### (6) Typical Document Disclosing an Orthodox Swing Angle Adjusting Apparatus

Japanese Utility Model Laid-Open No. 41675/1979 discloses a balance wheel swing angle adjusting apparatus provided with a swing angle adjusting plate that generates an overcurrent every time when a magnet of the balance wheel rocks and approaches for applying a damping force to the balance wheel.

### (7) Purposes of the Invention

A purpose of the invention is to provide an attitude sensor for use in a machine, a device and the like capable of detecting the attitude thereof highly accurately.

A purpose of the present invention is to provide a small-sized, highly accurate attitude sensor, which can be used in a small-sized precision machine such as a mechanical watch or the like.

### Disclosure of the Invention

The attitude sensor of the invention is characterized in that the attitude sensor comprises a case configured to have a shape seen from the top being circular and seen from the side including a curve, a plurality of patterns concentrically disposed on the inner surface of the case and a conductive fluid housed in the case.

In one viewpoint of the invention, the case of the attitude sensor is configured to have a shape seen from the side being oblong.

Additionally, in another viewpoint of the invention, the case of the attitude sensor is configured to have a shape seen from the side being elliptic.

Furthermore, in still another viewpoint of the invention, the case of the attitude sensor is configured to have an outside shape being spherical.

Moreover, in yet another viewpoint of the invention, the case of the attitude sensor is configured to have a cross-sectional shape seen from the side being cocoon-shaped.

According to such configurations, a small-sized, low-profile attitude sensor capable of detecting an attitude highly accurately can be realized.

Preferably, the attitude sensor of the invention includes an insulating fluid housed in the case.

Preferably, the patterns of the attitude sensor of the invention include a circular pattern disposed in the center and ring-shaped patterns concentrically disposed with respect to this pattern.

Additionally, the attitude sensor of the invention preferably comprises a plurality of resistances having different resistance values, the resistances being disposed so as to respond to a state of the conducted patterns of the attitude sensor, in which one of the resistances is configured to be connected to the attitude sensor based on the detected result of the attitude of the attitude sensor which have been detected by the attitude sensor.

Furthermore, in the invention, an attitude sensor is characterized in that the attitude sensor comprises a case defining the outside shape of the attitude sensor, a plurality of patterns disposed on the inner surface of the case, a conductive fluid housed in the case and an insulating fluid housed in the case.

In the attitude sensor of the invention configured in this manner, the specific gravity of the insulating fluid housed in the case is preferably configured to be smaller than that of the conductive fluid housed in the case.

In the attitude sensor of the invention configured in this manner, the viscosity of the insulating fluid housed in the case is preferably configured to be smaller than that of the conductive fluid housed in the case.

According to such configurations, an attitude sensor capable of detecting an attitude highly accurately without hypersensitively reacting to a change of attitude.

### Brief Description of the Drawings

Fig. 1 is a plan view showing a schematic geometry on the front side of an embodiment of a movement of a mechanical watch with the attitude sensor of the invention (the components thereof are partially omitted and bridge members are indicated by imaginary lines in Fig. 1);
Fig. 2 is a schematic partial section view of the embodiment of the movement of the mechanical watch with the attitude sensor of the invention (the components thereof are partially omitted in Fig. 2);
Fig. 3 is an enlarged partial plan view showing the schematic geometry of a balance wheel portion when a switching mechanism is in the OFF state in the mechanical watch with the attitude sensor of the invention;
Fig. 4 is an enlarged partial section view showing the schematic geometry of the balance wheel portion when the switching mechanism is in the OFF state in the mechanical watch with the attitude sensor of the invention;
Fig. 5 is a perspective view showing the schematic geometry of a balance wheel magnet used in the mechanical watch with the attitude sensor of the invention;
Fig. 6 is a longitudinal section view showing the schematic geometry of a first embodiment of the attitude sensor of the invention;
Fig. 7 is a plan view showing the schematic geometry of patterns disposed on the inner surface of a case lower-half part of the first embodiment of the attitude sensor of the invention;
Fig. 8 is a longitudinal section view showing the state of the attitude sensor being tilted in the first embodiment of the attitude sensor of the invention;
Fig. 9 is a longitudinal section view showing the state of the attitude sensor being placed vertically in the first embodiment of the attitude sensor of the invention;
Fig. 10 is a perspective view showing the configuration of lead wires in the first embodiment of the attitude sensor of the invention;
Fig. 11 is a block diagram showing the operation of the attitude sensor of the invention in the mechanical watch with the attitude sensor of the invention;
Fig. 12 is a circuit connection diagram showing the state of two patterns being conducted in the first embodiment of the attitude sensor of the invention;
Fig. 13 is a list showing the relationship among the attitudes of the mechanical watch being disposed, the states of the patterns conducted and the values of resistances disposed in a circuit block in the mechanical watch with the first embodiment of the attitude sensor of the invention;
Fig. 14 is an enlarged partial plan view showing the schematic geometry of the balance wheel portion when the switching mechanism is in the ON state in the mechanical watch with the attitude sensor of the invention;
Fig. 15 is an enlarged partial plan view showing the schematic geometry of the balance wheel portion when the switching mechanism is in the ON state in the mechanical watch with the attitude sensor of the invention;
Fig. 16 is a longitudinal section view showing the schematic geometry of a second embodiment of the attitude sensor of the invention;
Fig. 17 is a list showing the relationship among the attitudes of the mechanical watch being disposed, the states of patterns conducted and the values of resistances provided in a circuit block in the mechanical watch with the second embodiment of the attitude sensor of the invention;
Fig. 18 is a longitudinal section view showing the schematic geometry of a third embodiment of the attitude sensor of the invention;

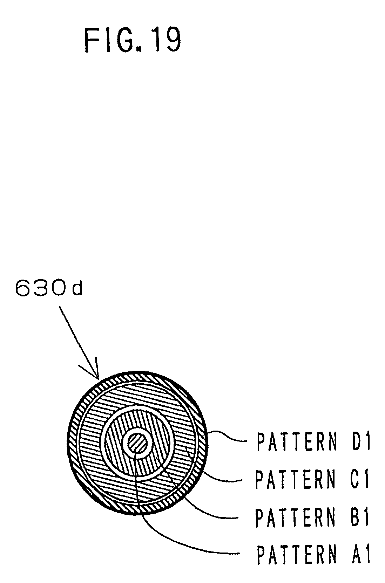

Fig. 19 is a plan view showing the schematic geometry of patterns disposed on the inner surface of a case lower half part of the third embodiment of the attitude sensor of the invention;
Fig. 20 is a longitudinal section view showing the state of the attitude sensor being tilted in the third embodiment of the attitude sensor of the invention;
Fig. 21 is a longitudinal section view showing the state of the attitude sensor being placed vertically in the third embodiment of the attitude sensor of the invention;
Fig. 22 is a perspective view showing the appearance of a fourth embodiment of the attitude sensor of the invention;
Fig. 23 is a longitudinal section view showing the schematic geometry of the fourth embodiment of the attitude sensor of the invention;
Fig. 24 is a longitudinal section view showing the state of the attitude sensor being tilted in the fourth embodiment of the attitude sensor of the invention;
Fig. 25 is a longitudinal section view showing the state of the attitude sensor being placed vertically in the fourth embodiment of the attitude sensor of the invention;
Fig. 26 is a circuit connection diagram in the state of two patterns being conducted in the fourth embodiment of the attitude sensor of the invention;
Fig. 27 is a list showing the relationship among the attitudes of the mechanical watch being disposed, the states of patterns conducted and the values of resistances disposed in a circuit block in the mechanical watch with the fourth embodiment of the attitude sensor of the invention;
Fig. 28 is a plan view showing the schematic geometry of patterns disposed on the inner surface of a case lower half part of the fourth embodiment of the attitude sensor of the invention;
Fig. 29 is a longitudinal section view showing the schematic geometry of a fifth embodiment of the attitude sensor of the invention;
Fig. 30 is a longitudinal section view showing the schematic geometry of a sixth embodiment of the attitude sensor of the invention;
Fig. 31 is a plan view showing the schematic geometry on the front side of a movement of an orthodox mechanical watch (the components thereof are partially omitted and bridge members are indicated by imaginary lines in Fig. 31);
Fig. 32 is a schematic partial section view of the movement of the orthodox mechanical watch (the components thereof are partially omitted in Fig. 32);
Fig. 33 is a graph schematically showing the relationship between elapsed time for which the spring is unwound from the fully wound state and the spring torque in the mechanical watch;
Fig. 34 is a graph schematically showing the relationship between the balance wheel swing angle and the spring torque in the mechanical watch;
Fig. 35 is a graph schematically showing the relationship between the balance wheel swing angle and the instantaneous rate when the mechanical watch is placed in the flat attitude;
Fig. 36 is a graph schematically showing the relationship between elapsed time for which the spring is unwound from the fully wound state and the instantaneous rate (the flat attitude and the erected attitude) in the mechanical watch; and
Fig. 37 is a graph schematically showing the relationship between elapsed time for which the spring is unwound from the fully wound state and the instantaneous rate in the mechanical watch of the invention and the orthodox mechanical watch.

### Best Mode for Carrying Out the Invention

Hereafter, an embodiment of the mechanical watch of the invention will be described according to the drawings.

### (1) Train, an Escapement and Governor and a Switch

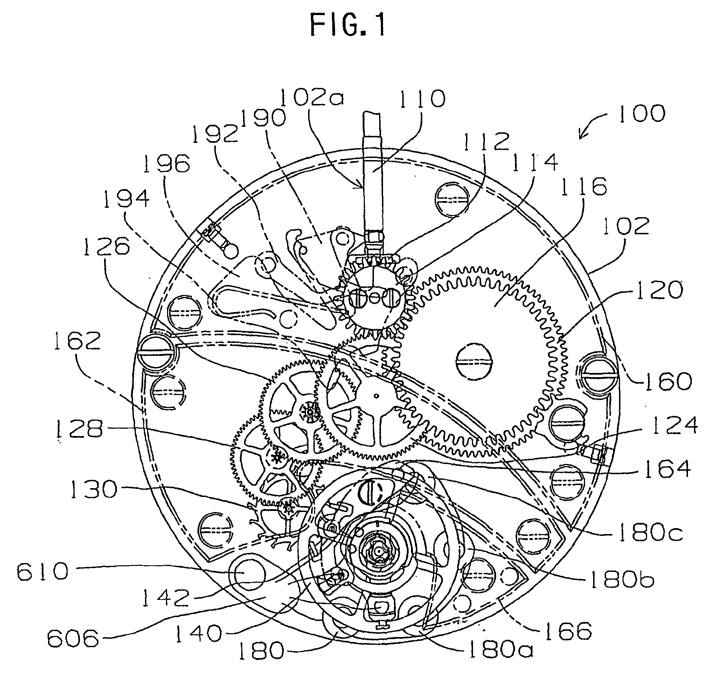

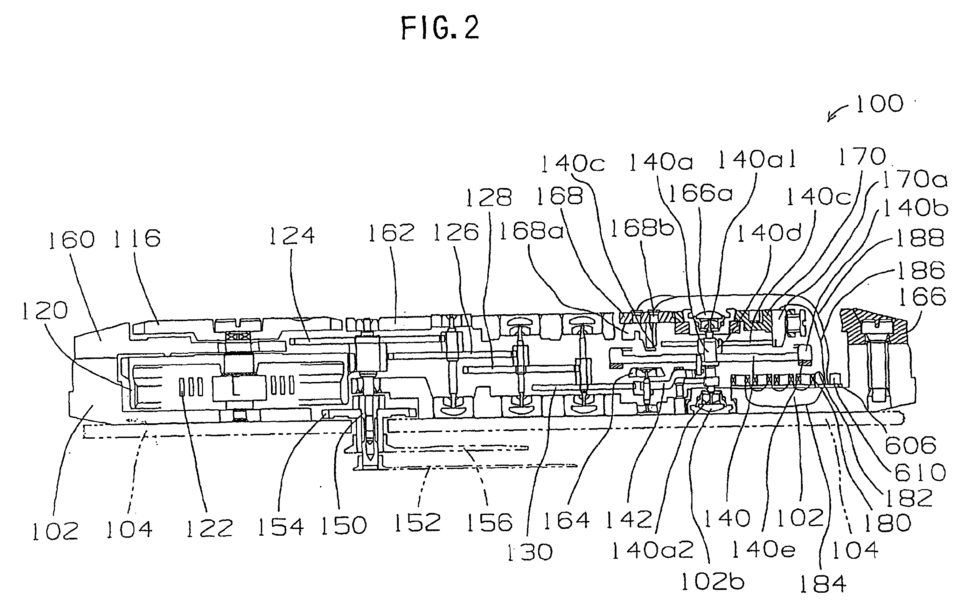

Referring to Figs. 1 and 2, in the embodiment of the mechanical watch of the invention, a movement (mechanical body) 100 of the mechanical watch has a main plate 102 that constitutes a base plate of the movement. A winding stem 110 is rotatably incorporated into a winding stem guide hole 102a of the main plate 102. A dial 104 (it is illustrated by imaginary lines in Fig. 2) is mounted on the movement 100.

The winding stem 110 has a rectangular part and a guide shaft part. A clutch wheel (not shown) is incorporated into the rectangular part of the winding stem 110. The clutch wheel has the same rotation axis as that of the winding stem 110. That is, the clutch wheel has a rectangular hole, this rectangular hole is fit into the rectangular part of the winding stem 110 and thereby the clutch wheel rotates according to the rotation of the winding stem 110. The clutch wheel has A teeth and B teeth. The A teeth are provided on the end of the clutch wheel closer to the center of the movement. The B teeth are provided on the end of the clutch wheel closer to the outside of the movement.

The movement 100 is provided with a switch for determining the position in the axial direction of the winding stem 110. The switch includes a setting lever 190, a yoke 192, a yoke spring 194 and a setting lever jumper 196. The position in the rotation axis direction of the winding stem 110 is determined based on the rotation of the setting lever. The position in the rotation axis direction of the clutch wheel is determined based on the rotation of the yoke. The yoke is positioned at a position in two rotational directions based on the rotation of the setting lever.

A click wheel 112 is rotatably incorporated into the guide shaft part of the winding stem 110. When the winding stem 110 is rotated with the winding stem 110 located at a first winding stem position (zeroth stage) closest to the inner side of the movement along the rotation axis direction, the click wheel 112 is configured to rotate through the rotation of the clutch wheel. A crown wheel 114 is configured to rotate by the rotation of the click wheel 112. A ratchet wheel 116 is configured to rotate by the rotation of the crown wheel 114.

The movement 100 uses a main spring 122 housed in a spring barrel 120 as a power source. The main spring 122 is made of an elastic material having spring properties such as an iron. The main spring 122 is configured to be wound by the rotation of ratchet wheel 116.

A center wheel and pinion 124 is configured to rotate by the rotation of the spring barrel 120. A third wheel and pinion 126 is configured to rotate based on the rotation of the center wheel and pinion 124. A fourth wheel and pinion 128 is configured to rotate based on the rotation of the third wheel and pinion 126. An escape wheel and pinion 130 is configured to rotate based on the rotation of the fourth wheel and pinion 128. The spring barrel 120, the center wheel and pinion 124, the third wheel and pinion 126 and the fourth wheel and pinion 128 constitute the front train.

The movement 100 is provided with an escapement and governor for controlling the rotation of the front train. The escapement and governor includes a balance wheel 140 that repeats rightward rotation and leftward rotation at a constant cycle, the escape wheel 130 that rotates based on the rotation of the front wheel train and a pallet 142 that controls the rotation of the escape wheel 130 based on the operation of the balance wheel 140.

Referring to Figs. 1 and 2, the balance wheel 140 includes a balance staff 140a, a balance wheel 140b and a hair spring 140c. The hair spring 140c is made of an elastic material having spring properties such as an "elinvar". That is, the hair spring 140c is made of a metallic conductive material.

A cannon pinion 150 rotates simultaneously based on the rotation of the center wheel and pinion 124. A minute hand 152 mounted on the cannon pinion 150 is configured to indicate a "minute". The cannon pinion 150 is provided with a slip mechanism having a predetermined slip torque with respect to the center wheel and pinion 124.

A minute wheel (not shown) rotates based on the rotation of the cannon pinion 150. An hour wheel 154 rotates based on the rotation of the minute wheel. An hour hand 156 mounted on the hour wheel 154 is configured to indicate an "hour".

The spring barrel 120 is rotatably supported with respect to the main plate 102 and a barrel bridge 160. The center wheel and pinion 124, the third wheel and pinion 126, the fourth wheel and pinion 128 and the escape wheel and pinion 130 are rotatably supported with respect to the main plate 102 and a train bridge 162. The pallet 142 is rotatably supported with respect to the main plate 102 and a pallet bridge 164.

The balance wheel 140 is rotatably supported with respect to the main plate 102 and a balance wheel bridge 166. That is, an upper tenon 140a1 of the balance staff 140a is rotatably supported with respect to a balance wheel upper bearing 166a fixed to the balance wheel bridge 166. The balance wheel upper bearing 166a includes a balance wheel upper hole jewel and a balance wheel upper bridge jewel. The balance wheel upper hole jewel and the balance wheel upper bridge jewel are made of an insulating material such as a ruby.

An under tenon 140a2 of the balance staff 140a is rotatably supported with respect to a balance wheel under bearing 102b fixed to the main plate 102. The balance wheel under bearing 102b includes a balance wheel lower hole jewel and a balance wheel lower bridge jewel. The balance wheel lower hole jewel and the balance wheel lower bridge jewel are made of an insulating material such as a ruby.

The hair spring 140c is a curled (spiral-shaped) thin plate spring having a plurality of turns. The inner end of the hair spring 140c is fixed to a collet 140d that is fixed to the balance staff 140a. The outer end of the hair spring 140c is fixed by a screw through a stud 170a mounted on a stud bridge 170 that is rotatably fixed to the balance wheel bridge 166. The balance wheel bridge 166 is made of a metallic conductive material such as a brass. The stud bridge 170 is made of a metallic conductive material such as an iron.

### (2) Switching Mechanism

Next, a switching mechanism of the mechanical watch of the invention will be described.

Referring to Figs 1 to 4, a switch lever 168 is rotatably mounted on the balance wheel bridge 166. A first contact member 168a and a second contact member 168b are mounted on the switch lever 168. The switch lever 168 is rotatably mounted on the balance wheel bridge 166 centering the rotational center of the balance wheel 140. The switch lever 168 is made of a plastic insulating material such as a polycarbonate. The first contact member 168a and the second contact member 168b are made of a metallic conductive material such as a brass. The portion of the hair spring 140c close to the outer end thereof is positioned between the first contact member 168a and the second contact member 168b.

Coils 180, 180a, 180b and 180c are mounted on the front side surface of the main plate 102 so as to face to the main plate side surface of the balance wheel 140b. As shown in Figs. 1 to 4, the number of the coils is four, for example, but it may be one, two, three or four or greater.

The balance wheel magnet 140e is mounted on the main plate side surface of the balance wheel 140b so as to face to the front side surface of the main plate 102.

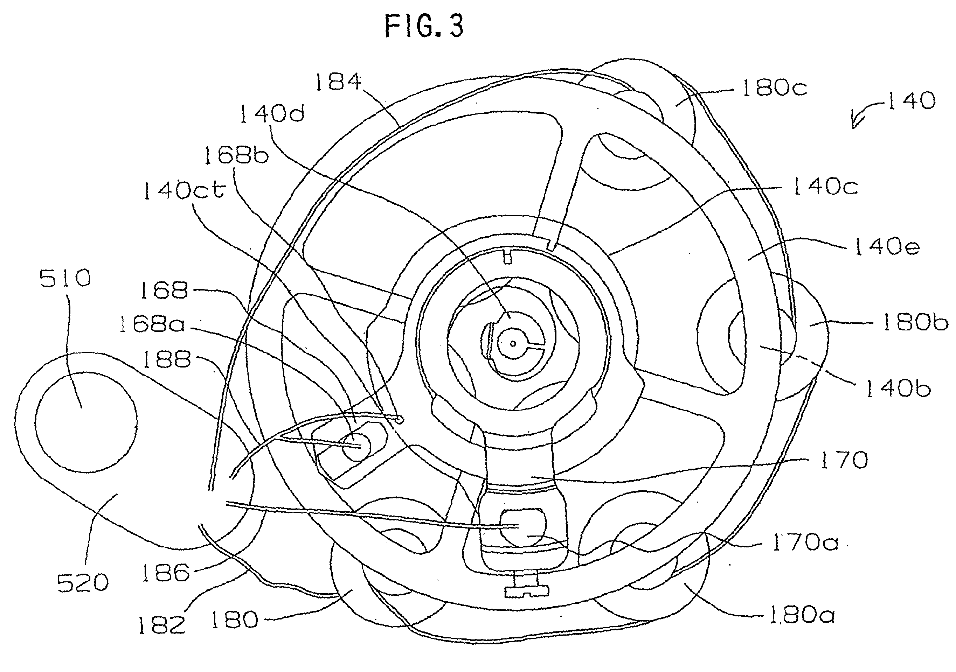

As shown in Figs. 1 and 3, the distance in the circumferential direction of the coils when a plurality of coils is disposed is preferably an integral multiple of the distance in the circumferential direction of the south pole and the north pole of the balance wheel magnet 140e disposed facing to the coils. However, the entire coils may not be disposed at the same distance in the circumferential direction. Furthermore, in such a configuration with a plurality of coils, a wiring between the respective coils is preferably serially wired so that electric currents generated in the respective coils by electromagnetic induction are not canceled each other. Alternatively, the wiring between the respective coils may be wired in parallel so that the electric currents generated in the respective coils by electromagnetic induction are not canceled each other.

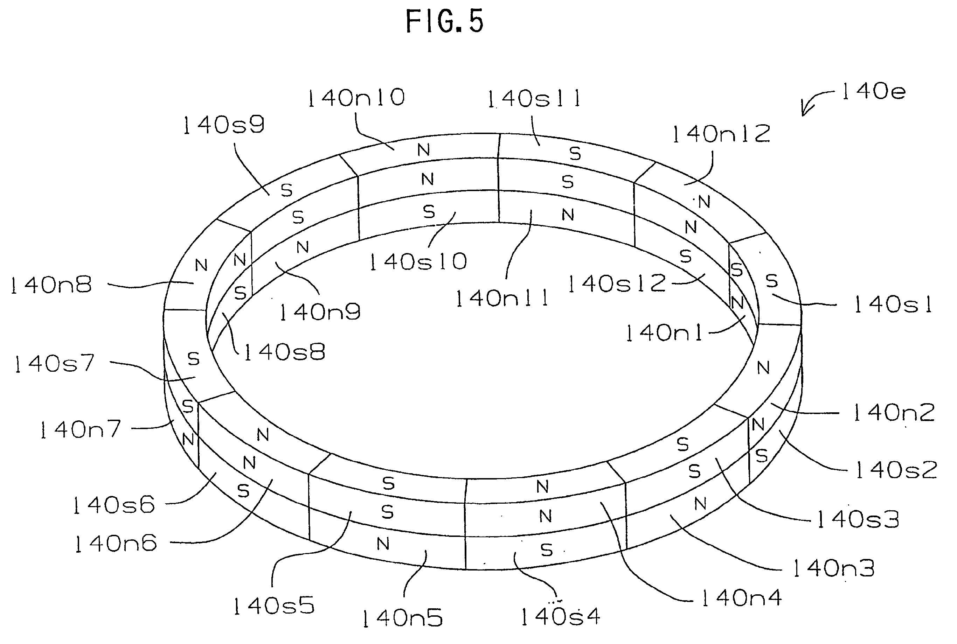

Referring to Fig. 5, the balance wheel magnet 140e has a circular (ring-like) shape in which magnet portions made of 12 south poles 140s1 to 140s12 and 12 north poles 140n1 to 140n12 which are polarized above and below, for example, are arranged alternately along the circumferential direction thereof. The number of the magnet portions arranged circularly (like a ring) in the balance wheel magnet 140e is twelve in the example shown in Fig. 5 but it is preferably plural more than one. Here, the length of a chord of one magnet portion is preferably set approximately equal to the outer diameter of one coil that is disposed facing to the magnet part.

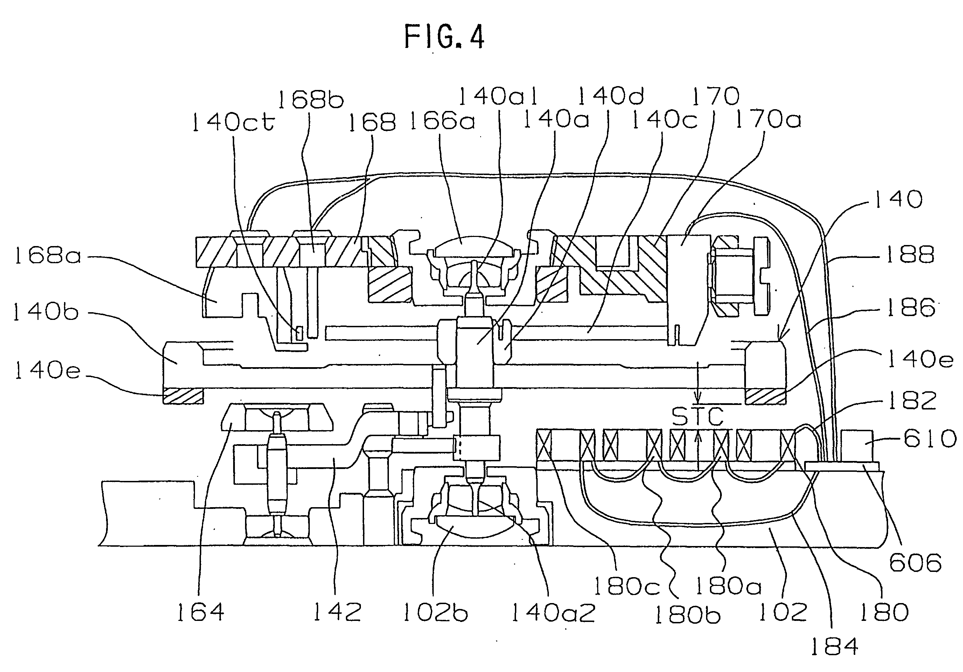

Referring to Figs. 2 and 4, a gap is disposed between the balance wheel magnet 140e and the coils 180, 180a, 180b and 180c. The gap between the balance wheel magnet 140e and the coils 180, 180a, 180b and 180c is determined so as to allow the magnetic force of the balance wheel magnet 140e to affect the coils 180, 180a, 180b and 180c when the coils 180, 180a, 180b and 180c are conducted.

When the coils 180, 180a, 180b and 180c are not conducted, the magnetic force of the balance wheel magnet 140e does not affect the coils 180, 180a, 180b and 180c. The balance wheel magnet 140e is fixed to the main plate side surface of the balance wheel 140b by bonding or the like in the state that one surface is in contact with the ring-like rim part of the balance wheel 140b and the other surface faces to the front side surface of the main plate 102.

Additionally, in Fig. 4, the thickness of the hair spring 140c (the thickness in the radial direction of the balance wheel) is depicted with exaggeration but it is 0.021 mm, for example. The balance wheel magnet 140e, for example, has the outer diameter of about 9 mm, the inner diameter of about 7 mm, the thickness of about 1 mm and the residual magnetic flux density is about 1 tesla. The respective coils 180, 180a, 180b and 180c have 1000 turns, for instance, and have the coil wire diameter of about 25 µm. The gap STC between the balance wheel magnet 140e and the coils 180, 180a, 180b and 180c is about 0.4 mm, for example.

### (3) First Embodiment of the Attitude Sensor

Next, in the embodiment of the mechanical watch with the attitude sensor of the invention, a first embodiment of the attitude sensor, an attitude sensor 610 and a circuit block 606 will be described.

Referring to Figs. 1 to 4, the attitude sensor 610 and the circuit block 606 are disposed on the front side of the main plate 102. The attitude sensor 610 is mounted on the circuit block 606. The circuit block 606 comprises a plurality of lead terminals.

A first lead wire 182 is provided to connect one terminal of the coil 180 to a first lead terminal (not shown) of the circuit block 606. The other terminal of the coil 180 is connected to one terminal of the coil 180a. The other terminal of the coil 180a is connected to one terminal of the coil 180b. The other terminal of the coil 180b is connected to one terminal of the coil 180c. That is, the four coils 180, 180a, 180b and 180c are connected in series.

A second lead wire 184 is provided to connect the other terminal of the coil 180c to a second lead terminal (not shown) of the circuit block 606. A third lead wire 186 is provided to connect the stud bridge 170 to a third lead terminal (not shown) of the circuit block 606. A fourth lead wire 188 is provided to connect the first contact member 168a and the second contact member 168b to a fourth lead terminal (not shown) of the circuit block 606.

Next, a structure of the first embodiment of the attitude sensor of the invention will be described.

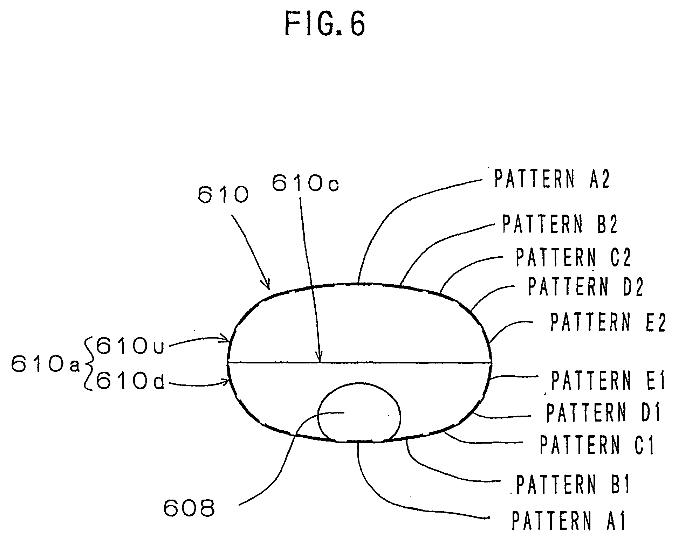

Referring to Fig. 6, the attitude sensor 610 has a case 610a in which the shape seen from the top is almost circular and the shape seen from the side is nearly "oblong".

The "oblong" defined here includes such a shape that a portion of a circular arc having a radius of first dimensions is disposed facing to a portion of a circular arc having the radius equal to the radius of the first dimensions so that the inner sides thereof come close to each other and the portions of both the circular arcs are linked by a portion of a circular arc having a radius of second dimensions, includes such a shape that the portions of both the circular arcs are linked by a straight line and includes such a shape that the portions of both the circular arcs are linked by portions of a plurality of circular arcs. In this case, the first dimensions are preferably smaller than the second dimensions.

The case 610a is formed symmetrically in the vertical direction with respect to a center plane 610c. That is, the case 610a includes a case upper-half part 610u and a case lower-half part 610d. Therefore, the case 610a is formed in which the case upper-half part 610u and the case lower-half part 610d are symmetrical with respect to the center plane 610c. That is, the case upper-half part 610u and the case lower-half part 610d are formed to have the same dimensions and the same shape.

Accordingly, for example, two case upper-half parts 610u are produced, the two case upper-half parts 610u are joined each other in portions corresponding to the center plane 610c and thereby the case 610a can be formed. This joining may be bonding, welding or conducted by using an adhesive tape.

In this manner, the case 610a is formed to have the shape seen from the side being approximately oblong and thereby the small-sized, low-profile attitude sensor 610 can be realized.

In Fig. 6, an x-axis (the right direction is to be the positive direction in Fig. 6) and a y-axis (the direction vertical to the paper surface and heading from the front to the back of the paper surface is to be the positive direction in Fig. 6) are defined in the horizontal direction. A z-axis (the upper direction is to be the positive direction in Fig. 6) is defined in the direction vertical to the x- and y-axes.

In the case 610a, the shape in a plane containing the x- and y-axes, i.e., the shape of the cross section of the center part is nearly circular and the shape in a plane containing the x- and z-axes, i.e., the shape of the longitudinal section of the center part is nearly oblong.

The case 610a is made of an insulating material such as a plastic such as a polyimide, a glass epoxy substrate and a quartz.

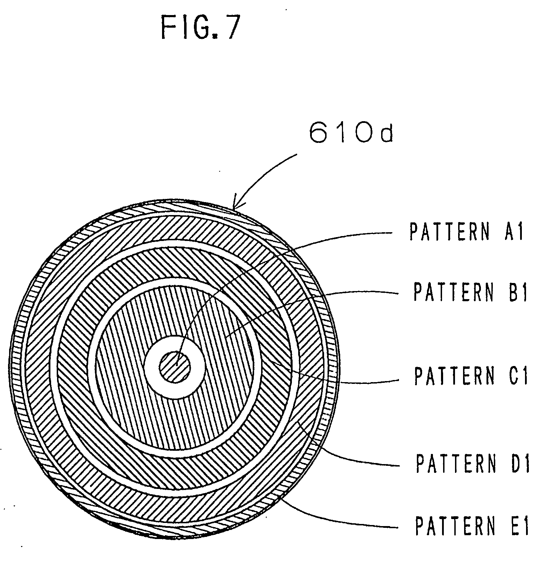

Referring to Figs. 6 and 7, a pattern (hereinafter, simply referred to as a "pattern") A1 constituting an electrode of the attitude sensor 610 is disposed on the inner surface of the center of the case lower-half part 610d. The outer peripheral part of the pattern A1 is formed in a circular shape.

A pattern B1 is disposed on the inner surface of the center of the case lower-half part 610d on the outer peripheral side of the pattern A1. The inner peripheral part of the pattern B1 is formed in a circular shape concentric with the outer peripheral part of the pattern A1, being spaced from the outer peripheral part of the pattern A1. The outer peripheral part of the pattern B1 is formed in a circular shape concentric with the inner peripheral part of the pattern B1, being spaced from the inner peripheral part of the pattern B1. That is, the pattern B1 is ring-shaped.

A pattern C1 is disposed on the inner surface of the center of the case lower-half part 610d on the outer peripheral side of the pattern B1. The inner peripheral part of the pattern C1 is formed in a circular shape concentric with the outer peripheral part of the pattern B1, being spaced from the outer peripheral part of the pattern B1. The outer peripheral part of the pattern C1 is formed in a circular shape concentric with the inner peripheral part of the pattern C1, being spaced from the inner peripheral part of the pattern C1. That is, the pattern C1 is ring-shaped.

A pattern D1 is disposed on the inner surface of the center of the case lower-half part 610d on the outer peripheral side of the pattern C1. The inner peripheral part of the pattern D1 is formed in a circular shape concentric with the outer peripheral part of the pattern C1, being spaced from the outer peripheral part of the pattern C1. The outer peripheral part of the pattern D1 is formed in a circular shape concentric with the inner peripheral part of the pattern D1, being spaced from the inner peripheral portion of the pattern D1. That is, the pattern D1 is ring-shaped.

A pattern E1 is disposed on the inner surface of the center of the case lower-half part 610d on the outer peripheral side of the pattern D1. The inner peripheral part of the pattern E1 is formed in a circular shape concentric with the outer peripheral part of the pattern D1, being spaced from the outer peripheral portion of the pattern D1. The outer peripheral part of the pattern E1 is formed in a circular shape concentric with the inner peripheral part of the pattern E1, being spaced from the inner peripheral portion of the pattern E1. That is, the pattern E1 is ring-shaped.

As similar to the shapes of the patterns A1, B1, C1, D1 and E1 of the case lower-half part 610d, patterns A2, B2, C2, D2 and E2 are formed on the case upper-half part 610u. That is, the outer peripheral part of the pattern A2 is formed in a circular shape and the patterns B2, C2, D2 and E2 are ring-shaped. Then, the shapes of the patterns A1, B1, C1, D1 and E1 of the case lower-half part 610d are almost the same as the shapes of the patterns A2, B2, C2, D2 and E2 of the case upper-half part 610u, respectively.

As described above, the respective patterns A1, B1, C1, D1, E1, A2, B2, C2, D2 and E2 are insulated each other.

In the embodiment of the mechanical watch with the attitude sensor of the invention, the attitude sensor 610 is disposed with respect to the main plate 102 so that the x- and y-axes run in parallel to the front surface of the main plate 102 and in parallel to the front surface of the dial 104. Accordingly, the attitude sensor 610 is configured with respect to the main plate 102 so that the z-axis runs vertical to the front surface of the main plate 102 and vertical to the front surface of the dial 104.

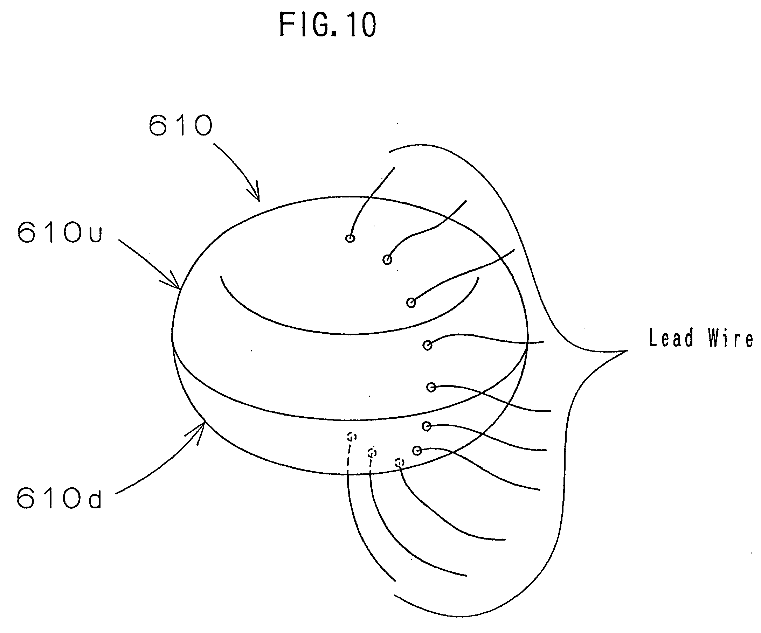

Referring to Fig. 10, lead wires for transmitting signals from the patterns are connected to the respective patterns A1, B1, C1, D1, E1, A2, B2, C2, D2 and E2.

Referring to Fig. 6, a conductive fluid 608 is housed in the case 610a. The conductive fluid 608 is a mercury, for instance. In the example shown in Fig. 6, the volume of the conductive fluid 608 is 1/28 of that of the case 610a but it is preferably 1/50 to 1/10 of that of the case 610a. The volume of the conductive fluid 608 is defined so that the conductive fluid 608 is allowed to come into contact with two or three patterns.

In the horizontal state shown in Fig. 6, the conductive fluid 608 is in contact with the pattern A1 and the pattern B1. Thus, in the state shown in Fig. 6, the pattern A1 and the pattern B1 are short-circuited by the conductive fluid 608 (that is, they are conducted each other).

That is, Fig. 6 shows the state of the attitude sensor 610 when the mechanical watch with the attitude sensor of the invention is disposed in the "flat attitude".

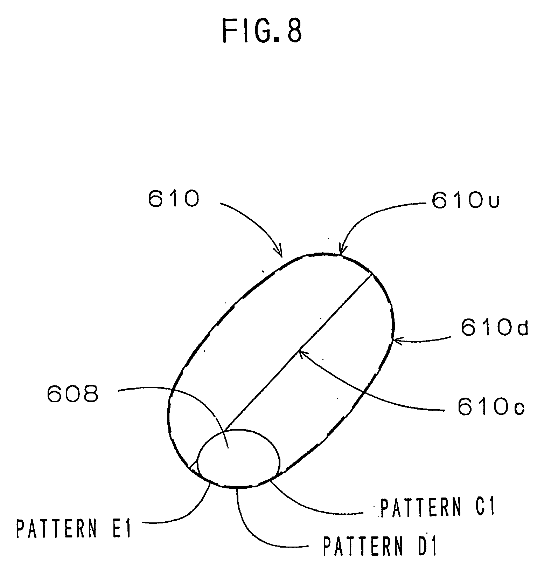

Next, referring to Fig. 8, in the state that the attitude sensor 610 is disposed to tilt to 45 degrees with respect to the horizontal plane, the conductive fluid 608 is in contact with the pattern C1, the pattern D1 and the pattern E1. Accordingly, in the state shown in Fig. 8, the pattern C1, the pattern D1 and the pattern E1 are short-circuited by the conductive fluid 608 (that is, they are conducted each other).

That is, Fig. 8 shows the state of the attitude sensor 610 when the mechanical watch with the attitude sensor of the invention is disposed in the "slanted attitude".

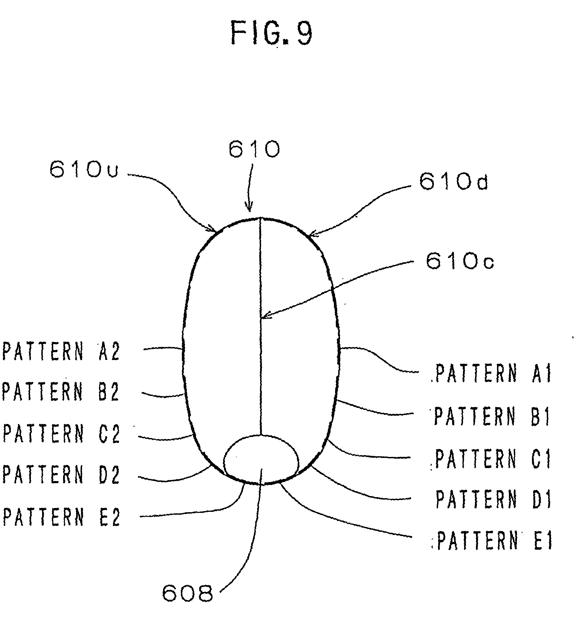

Next, referring to Fig. 9, in the state that the attitude sensor 610 is disposed to form at 90 degrees (vertically) with respect to the horizontal plane, the conductive fluid 608 is in contact with the pattern E1 and the pattern E2. Accordingly, in the state shown in Fig. 8, the pattern E1 and the pattern E2 are short-circuited by the conductive fluid 608 (that is, they are conducted each other).

That is, Fig. 9 shows the state of the attitude sensor 610 when the mechanical watch with the attitude sensor of the invention is disposed in the "erected attitude".

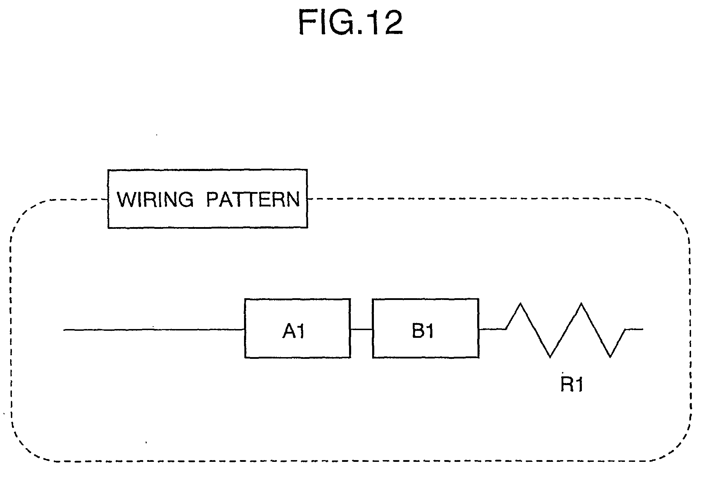

Referring to Fig. 12, in the state shown in Fig. 12, a wiring pattern is formed in the circuit block 606 so that a resistance R1 is serially connect to the pattern A1 and the pattern B1 when the pattern A1 and the pattern B1 are conducted each other. Then, in the state shown in Fig. 12, the resistance R1 is configured to be connected in series to the four coils 180, 180a, 180b and 180c by the wiring pattern.

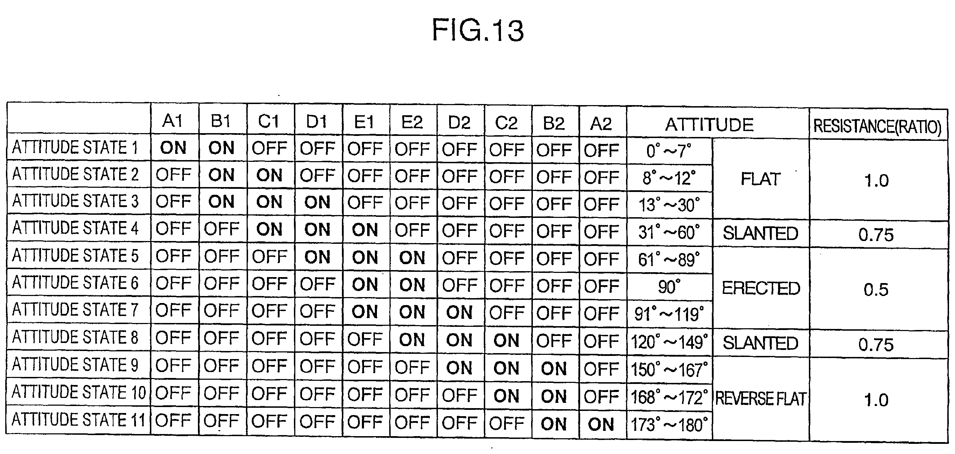

Referring to Fig. 13, in the first embodiment of the attitude sensor of the invention, the relationship between the various pattern pattern conducted states and the values of the resistances disposed in the circuit is shown.

In Fig. 13, A1, B1, C1, D1, E1, E2, D2, C2, B2 and A2 represent the pattern A1, the pattern B1, the pattern C1, the pattern D1, the pattern E1, the pattern E2, the pattern D2, the pattern C2, the pattern B2 and the pattern A2, respectively. "ON" indicates that the pattern is in the state conducted to other patterns described as "ON". "OFF" indicates that the pattern is not in the state conducted to any other pattern.

### (3.1) Attitude State 1

An attitude state 1 shown in Fig. 13 corresponds to the case of the mechanical watch with the attitude sensor of he invention being in the "flat attitude".

The attitude state 1 corresponds to the case of the mechanical watch with the attitude sensor of the invention being in the range of 0 degree to 7 degrees with respect to the horizontal plane.

In the attitude state 1, the circuit block 606 is configured in which the pattern A1 and the pattern B1 are conducted each other and the resistance R1 is serially connected to the pattern A1 and the pattern B1. Then, in the attitude state 1, the resistance R1 is configured to be connected in series to the four coils 180, 180a, 180b and 180c by the wiring pattern. The value of the resistance R1 at this time is to be a reference value Rref (ohm).

For example, when a combined resistance value of the four coils 180, 180a, 180b and 180c is set 1.7 kilohm, the reference value Rref is 1.2 kilohm.

### (3.2) Attitude State 2

An attitude state 2 shown in Fig. 13 corresponds to the case of the mechanical watch with the attitude sensor of the invention being in the "flat attitude".

The attitude state 2 corresponds to the case of the mechanical watch with the attitude sensor of the invention being in the range of 8 degrees to 12 degrees with respect to the horizontal plane.

In the attitude state 2, the circuit block 606 is configured in which the pattern B1 and the pattern C1 are conducted each other and the resistance R1 is serially connected to the pattern B1 and the pattern C1. Then, in the attitude state 1, the resistance R1 is configured to be connected in series to the four coils 180, 180a, 180b and 180c by the wiring pattern.

### (3.3) Attitude State 3

An attitude state 3 in Fig. 13 corresponds to the case of the mechanical watch with the attitude sensor of the invention being in the "flat attitude".

The attitude state 3 corresponds to the case of the mechanical watch with the attitude sensor of the invention being in the range of 13 degrees to 30 degrees with respect to the horizontal plane.

In the attitude state 3, the circuit block 606 is configured in which the patterns B1, the pattern C1 and the pattern D1 are conducted each other and the resistance R1 is serially connected to the pattern B1, the pattern C1 and the pattern D1. Then, in the attitude state 1, the resistance R1 is configured to be connected in series to the four coils 180, 180a, 180b and 180c by the wiring pattern.

### (3.4) Attitude State 4

An attitude state 4 in Fig. 13 corresponds to the case of the mechanical watch with the attitude sensor of the invention being in the "slanted attitude".

The attitude state 4 corresponds to the case of the mechanical watch with the attitude sensor of the invention being in the range of 31 degrees to 60 degrees with respect to the horizontal plane.

In the attitude state 4, the circuit block 606 is configured in which the pattern C1, the pattern D1 and the pattern E1 are conducted each other and a resistance R2 is serially connected to the pattern C1, the pattern D1 and the pattern E1. Then, in the attitude state 4, the resistance R2 is configured to be connected in series to the four coils 180, 180a, 180b and 180c by the wiring pattern. The value of the resistance R2 at this time is configured to become 0.75 times the reference value Rref (ohm) (that is, 0.75 × Rref).

### (3.5) Attitude State 5

An attitude state 5 shown in Fig. 13 corresponds to the case of the mechanical watch with the attitude sensor of the invention being in the "erected attitude".

The attitude state 5 corresponds to the case of the mechanical watch with the attitude sensor of the invention being in the range of 61 degrees to 89 degrees with respect to the horizontal plane.

In the attitude state 5, the circuit block 606 is configured in which the pattern D1, the pattern E1 and the pattern E2 are conducted each other and a resistance R3 is serially connected to the pattern D1, the pattern E1 and the pattern E2. Then, in the attitude state 5, the resistance R3 is configured to be connected in series to the four coils 180, 180a, 180b and 180c by the wiring pattern. The value of the resistance R3 at this time is configured to become 0.5 times the reference value Rref (ohm) (that is, 0.5 × Rref).

### (3.6) Attitude State 6

An attitude state 6 shown in Fig. 13 corresponds to the case of the mechanical watch with the attitude sensor of the invention being in the "erected attitude".

The attitude state 6 corresponds to the case of the mechanical watch with the attitude sensor of the invention being at 90 degrees with respect to the horizontal plane, i.e., the state of it being disposed vertically.

In the attitude state 6, the circuit block 606 is configured in which the pattern E1 and the pattern E2 are conducted each other and the resistance R2 is serially connected to the pattern E1 and the pattern E2. Then, in the attitude state 6, the resistance R3 is configured to be connected in series to the four coils 180, 180a, 180b and 180c by the wiring pattern. The value of the resistance R3 at this time is configured to become 0.5 times the reference value Rref (ohm) (that is, 0.5 × Rref).

### (3.7) Attitude State 7

An attitude state 7 shown in Fig. 13 corresponds to the case of the mechanical watch with the attitude sensor of the invention being in the "erected attitude".

The attitude state 7 corresponds to the case of the mechanical watch with the attitude sensor of the invention being in the range of 91 degrees to 119 degrees with respect to the horizontal plane.

In the attitude state 7, the circuit block 606 is configured in which the pattern E1, the pattern E2 and the pattern D2 are conducted each other and the resistance R3 is serially connected to the pattern E1, the pattern E2 and the pattern D2. Then, in the attitude state 7, the resistance R3 is configured to be connected in series to the four coils 180, 180a, 180b and 180c by the wiring pattern. The value of the resistance R3 at this time is configured to become 0.5 times the reference value Rref (ohm) (that is, 0.5 × Rref).

### (3.8) Attitude State 8

An attitude state 8 shown in Fig. 13 corresponds to the case of the mechanical watch with the attitude sensor of the invention being in the "slanted attitude".

The attitude state 8 corresponds to the case of the mechanical watch with the attitude sensor of the invention being in the range of 120 degrees to 149 degrees with respect to the horizontal plane.

In the attitude state 8, the circuit block 606 is configured in which the pattern E2, the pattern D2 and the pattern C2 are conducted each other and the resistance R2 is serially connected to the pattern E2, the pattern D2 and the pattern C2. Then, in the attitude state 8, the resistance R2 is configured to be connected in series to the four coils 180, 180a, 180b and 180c by the wiring pattern. The value of the resistance R2 at this time is configured to become 0.75 times the reference value Rref (ohm) (that is, 0.75 × Rref).

### (3.9) Attitude State 9

An attitude state 9 shown in Fig. 13 corresponds to the case of the mechanical watch with the attitude sensor of the invention being in the "reverse flat attitude".

The attitude state 9 corresponds to the case of the mechanical watch with the attitude sensor of the invention being in the range of 150 degrees to 167 degrees with respect to the horizontal plane.

In the attitude state 9, the circuit block 606 is configured in which the pattern D2, the pattern C2 and the pattern B2 are conducted each other and the resistance R1 is serially connected to the pattern D2, the pattern C2 and the pattern B2. Then, in the attitude state 9, the resistance R1 is configured to be connected in series to the four coils 180, 180a, 180b and 180c by the wiring pattern. The value of the resistance R1 at this time is configured to become the reference value Rref.

### (3.10) Attitude State 10

An attitude state 10 shown in Fig. 13 corresponds to the case of the mechanical watch with the attitude sensor of the invention being in the "reverse flat attitude".

The attitude state 10 corresponds to the case of the mechanical watch with the attitude sensor of the invention being in the range of 168 degrees to 172 degrees with respect to the horizontal plane.

In the attitude state 10, the circuit block 606 is configured in which the pattern C2 and the pattern B2 are conducted each other and the resistance R1 is serially connected to the pattern C2 and the pattern B2. Then, in the attitude state 10, the resistance R1 is configured to be connected in series to the four coils 180, 180a, 180b and 180c by the wiring pattern. The value of the resistance R1 at this time is configured to become the reference value Rref.

### (3.11) Attitude State 11

An attitude state 11 shown in Fig. 13 corresponds to the case of the mechanical watch with the attitude sensor of the invention being in the "reverse flat attitude".

The attitude state 11 corresponds to the case of the mechanical watch with the attitude sensor of the invention being in the range of 173 degrees to 180 degrees with respect to the horizontal plane.

In the attitude state 11, the circuit block 606 is configured in which the pattern B2 and the pattern A2 are conducted each other and the resistance R1 is serially connected to the pattern B2 and the pattern A2. Then, in the attitude state 11, the resistance R1 is configured to be connected in series to the four coils 180, 180a, 180b and 180c by the wiring pattern. The value of the resistance R1 at this time is configured to become the reference value Rref.

### (3.12) A List in Other Embodiments

In other embodiments of the attitude sensor of the invention, a list of the relationship between the various pattern-to-pattern conducted states and the value of the resistances disposed in the circuit block can be created as well. Accordingly, the wiring of the circuit block and the value of the resistances can also be determined for the other embodiments of the attitude sensor in the same manner as the contents in Fig. 13 set forth.

### (4) Operation of the Balance Wheel when the Coils are not Conducted

The operation of the balance wheel 140 when the coils 180, 180a, 180b and 180c are not conducted, i.e., when the circuit is opened will be described with reference to Figs. 3, 4 and 11.

The hair spring 140c expands and contracts in the radial direction of the hair spring 140c in response to the angle of rotation of the balance wheel 140 rotating. For instance, in the state shown in Fig. 3, when the balance wheel 140 rotates clockwise, the hair spring 140c contracts in the direction toward the center of the balance wheel 140, whereas when the balance wheel 140 rotates counterclockwise, the hair spring 140c expands in the direction moving away from the center of the balance wheel 140.

On this account, in Fig. 3, when the balance wheel 140 rotates clockwise, the hair spring 140c operates so as to approach the second contact member 168b. On the contrary, when the balance wheel 140 rotates counterclockwise, the hair spring 140c operates so as to approach the first contact member 168a.

When the angle of rotation (swing angle) of the balance wheel 140 is a certain threshold value, e.g., below 180 degrees, the hair spring 140c does not come into contact with the first contact member 168a nor the second contact member 168b because the amount of the hair spring 140c expanded and contracted in the radial direction is small.

When the angle of rotation (swing angle) of the balance wheel 140 is a certain threshold value, e.g., 180 degrees or above, the hair spring 140c comes into contact with both the first contact member 168a and the second contact member 168b because the amount of the hair spring 140c expanded and contracted in the radial direction becomes large sufficiently.

For instance, a portion 140ct close to the outer end of the hair spring 140c is located in the middle of the gap of about 0.04 mm between the first contact member 168a and the second contact member 168b. Accordingly, in the state of the swing angle of the balance wheel 140 being in a range over 0 degree and below 180 degrees, the portion 140ct close to the outer end of the hair spring 140c does not come into contact with the first contact member 168a nor the second contact member 168b. That is, since the outer end of the hair spring 140c does not come into contact with the first contact member 168a nor the second contact member 168b, the coils 180, 180a, 180b and 180c are not conducted and the magnetic flux of the balance wheel magnet 140e does not affect the coils 180, 180a, 180b and 180c. Consequently, the swing angle of the balance wheel 140 is not damped by the effect of the balance wheel magnet 140e and the coils 180, 180a, 180b and 180c.

### (5) Operation of the Balance Wheel when Coils are Conducted

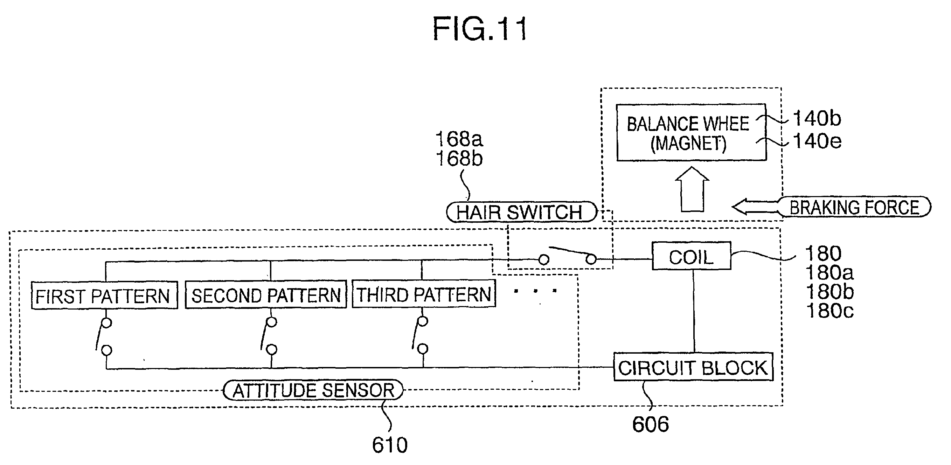

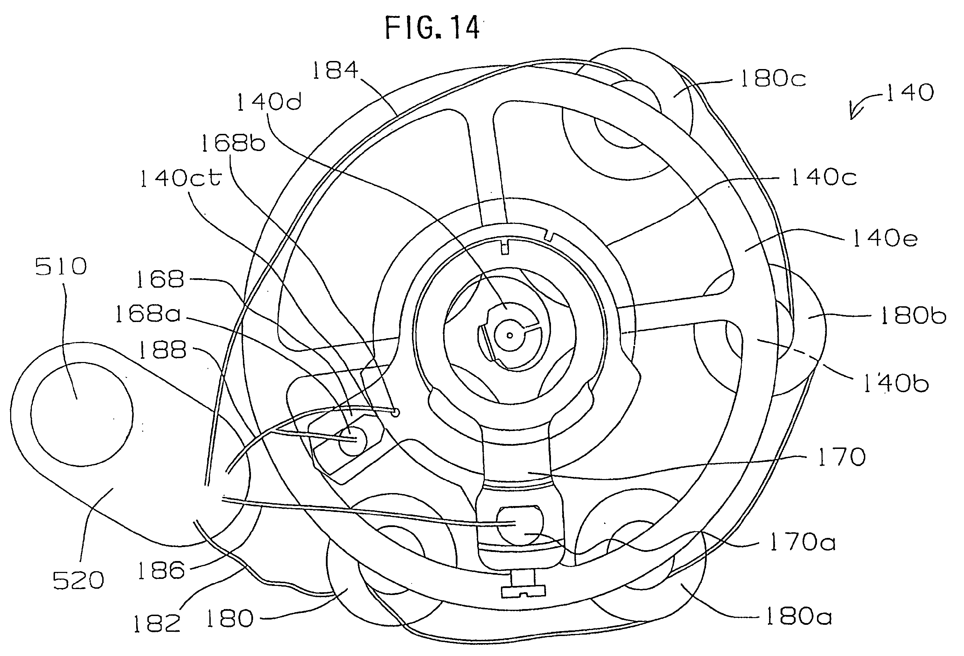

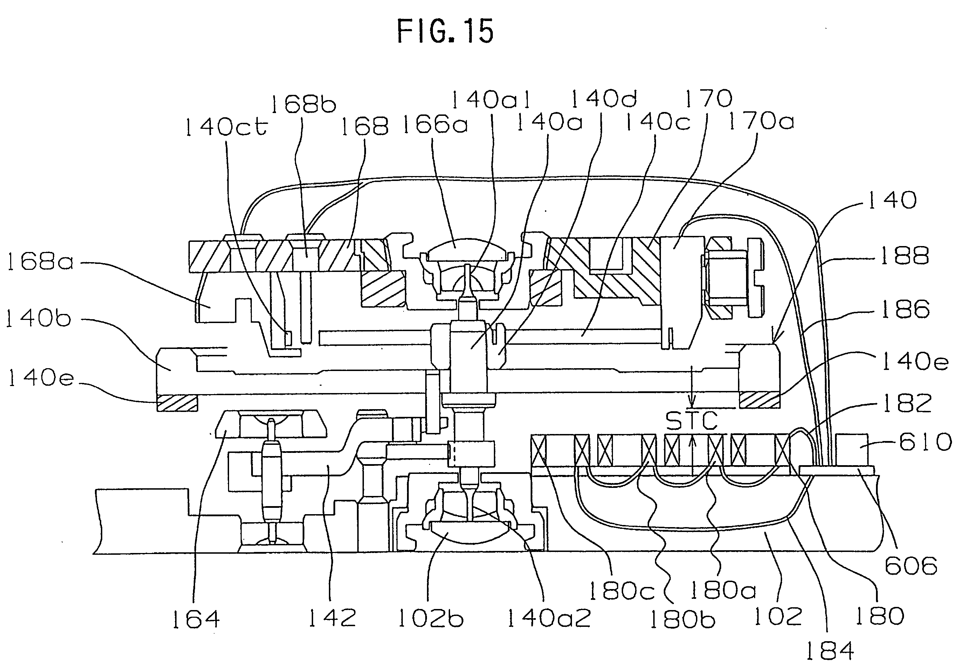

Next, the operation of the balance wheel 140 when the coils 180, 180a, 180b and 180c are conducted, i.e., when the circuit is closed will be described with reference to Figs. 11, 14 and 15. That is, Figs. 14 and 15 depict the case of the swing angle of the balance wheel 140 being 180 degrees or more.

Additionally, in Fig. 15, the thickness of the hair spring 140c (thickness in the radial direction of the balance wheel) is illustrated with exaggeration.

When the swing angle of the balance wheel 140 reaches 180 degrees or above, the portion 140ct close to the outer end of the hair spring 140c comes into contacts with the first contact member 168a or the second contact member 168b. In such a state, the coils 180, 180a, 180b and 180c are conducted and an induced current generated due to a change in the magnetic flux of the balance wheel magnet 140e exerts such a force that suppresses the rotational motion of the balance wheel 140 on the balance wheel 140. Then, by this effect, a braking force suppressing the rotation of the balance wheel 140 is applied to the balance wheel 140 and the swing angle of the balance wheel 140 is reduced.

Then, when the swing angle of the balance wheel 140 is reduced to the range over 0 degree and below 180 degrees, the portion 140ct close to the outer end of the hair spring 140c is put in the state that it does not come into contact with the first contact member 168a nor the second contact member 168b. Accordingly, as shown in Figs. 3 and 4, since the outer end of the hair spring 140c does not come into contact with the first contact member 168a nor the second contact member 168b, the coils 180, 180a, 180b and 180c are not conducted and the magnetic flux of the balance wheel magnet 140e does not affect the coils 180, 180a, 180b and 180c.

In the state that the mechanical watch with the attitude sensor of the invention is in the "flat attitude" when the coils 180, 180a, 180b and 180c are conducted, i.e., when the circuit is closed, the resistance R1 is serially connected to the four coils 180, 180a, 180b and 180c. Therefore, in such a state, the coils 180, 180a, 180b and 180c are conducted to the resistance R1. Then, the induced current generated due to a change in the magnetic flux of the balance wheel magnet 140e exerts such a force that suppresses the rotational motion of the balance wheel 140 on the balance wheel 140. That is, in order to suppress the rotation of the balance wheel 140, a braking force having a magnitude corresponding to the resistance value Rref (ohm) is applied to the balance wheel 140 to reduce the swing angle of the balance wheel 140.

In the state that the mechanical watch with the attitude sensor of the invention is not in the "flat attitude", the "reverse flat attitude" nor the "erected attitude" when the coils 180, 180a, 180b and 180c are conducted, i.e., when the circuit is closed, the resistance R2 is serially connected to the four coils 180, 180a, 180b and 180c. The value of the resistance R2 at this time is 0.75 times the reference value Rref (that is, 0.75 × Rref).

In such a state, the coils 180, 180a, 180b and 180c are conducted to the resistance R2. Then, the induced current generated due to a change in the magnetic flux of the balance wheel magnet 140e exerts such a force that suppresses the rotational motion of the balance wheel 140 on the balance wheel 140. That is, in order to suppress the rotation of the balance wheel 140, a braking force having a magnitude corresponding to the resistance value of 0.75 × Rref (ohm) is applied to the balance wheel 140 to reduce the swing angle of the balance wheel 140.

By setting the resistance value in this manner, the mechanical watch with the attitude sensor of the invention is configured in which the braking force in the state of the mechanical watch not being in the "erected attitude", the "flat attitude" nor the "reverse flat attitude" becomes smaller than that in the state of the mechanical watch with the attitude sensor of the invention being in the "flat attitude" and the "reverse flat attitude". Additionally, the mechanical watch with the attitude sensor of the invention is configured in which the braking force in the state of the mechanical watch not being in the "erected attitude", the "flat attitude" nor the "reverse flat attitude" becomes greater than that in the state of the mechanical watch with the attitude sensor of the invention being in the "erected attitude".

In the state that the mechanical watch with the attitude sensor of the invention is in the "erected attitude" when the coils 180, 180a, 180b and 180c are conducted, i.e., when the circuit is closed, the resistance R3 is serially connected to the four coils 180, 180a, 180b and 180c. The value of the resistance R3 at this time is 0.5 times the reference value Rref (that is, 0.5 × Rref).

In such a state, the coils 180, 180a, 180b and 180c are conducted to the resistance R3. Then, the induced current generated due to a change in the magnetic flux of the balance wheel magnet 140e exerts such a force that suppresses the rotational motion of the balance wheel 140 on the balance wheel 140. That is, in order to suppress the rotation of the balance wheel 140, a braking force having a magnitude corresponding to the resistance value of 0.5 × Rref (ohm) is applied to the balance wheel 140 to reduce the swing angle of the balance wheel 140.

By setting the resistance value in this manner, the mechanical watch with the attitude sensor of the invention is configured in which the braking force in the state of the mechanical watch being in the "erected attitude" becomes smaller than that in the state of the mechanical watch with the attitude sensor of the invention being in the "flat attitude" and the "reverse flat attitude".

The mechanical watch with the attitude sensor of the invention configured in this manner can control the rotational angle of the balance wheel 140 highly accurately in response to the various attitudes of the mechanical watch.

As described above, according to the invention, in the mechanical watch where the escapement and governor is configured to include the balance wheel that repeats rightward rotation and leftward rotation, the escape wheel that rotates based on the rotation of the front train and the pallet that controls the rotation of the escape wheel based on the operation of the balance wheel, the angle of rotation of the balance wheel can be controlled in response to the various attitudes of the mechanical watch. Thus, the accuracy of the mechanical watch can be improved without reducing the duration of the mechanical watch.

That is, the invention focused attention on the relationship between the instantaneous and the swing angle, the swing angle was kept constant by controlling the angle of rotation of the balance wheel in response to the various attitudes of the mechanical watch. Thereby, a change in the instantaneous rate is suppressed and the advancement and the delay in the watch per day were adjusted to be smaller.

On the contrary, in the orthodox mechanical watch, the swing angle changes over time because of the relationship between the duration and the swing angle. Additionally, the instantaneous rate changes over time because of the relationship between the swing angle and the instantaneous rate. Furthermore, the instantaneous rate changes over time because of the relationship between the attitude and the instantaneous rate.

On this account, it has been difficult to prolong the duration of the mechanical watch capable of maintaining a constant accuracy.

### (5) Second Embodiment of the Attitude Sensor

Next, in the embodiment of the mechanical watch with the attitude sensor of the invention, a second embodiment of the attitude sensor of the invention, an attitude sensor 620, will be described.

The following description will mainly explain points where the second embodiment of the attitude sensor of the invention defers from the first embodiment of the attitude sensor of the invention. Accordingly, the points except the contents described below will be applied to the description of the first embodiment of the attitude sensor of the invention mentioned above.

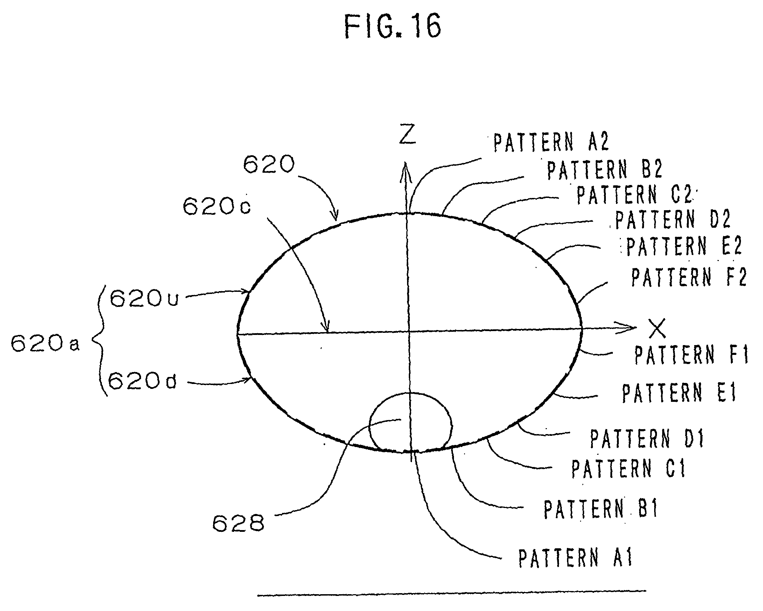

Referring to Fig. 16, the attitude sensor 620 has a case 620a in which the shape seen from the top is approximately circular and the shape seen from the side, i.e., the shape of the longitudinal section of the center part is nearly "elliptic".

Here, the "elliptic" includes a geometrically elliptic shape and includes such a shape that is nearly elliptic and has a thickness in the z-axis direction smaller than that in the x-axis direction and smaller than that in the y-axis direction.

The case 620a is formed symmetrically in the vertical direction with respect to a center plane 620c. That is, the case 620a includes a case upper-half part 620u and a case lower-half part 620d. Therefore, the case 620a is formed in which the case upper-half part 620u and the case lower-half part 620d are symmetrical with respect to the center plane 620c. That is, the case upper-half part 620u and the case lower-half part 620d are formed to have the same dimensions and the same shape.

In this manner, the case 620a is formed to have the shape seen from the side being approximately elliptic and thereby the small-sized, low-profile attitude sensor 620 can be realized.

In Fig. 16, an x-axis (the right direction is to be the positive direction in Fig. 16) and a y-axis (the direction vertical to the paper surface and heading from the front to the back of the paper surface is to be the positive direction in Fig. 16) are defined in the horizontal direction. A z-axis (the upper direction is to be the positive direction in Fig. 16) is defined in the direction vertical to the x- and y-axes.

In the case 620a, the shape in a plane containing the x- and y-axes, i.e., the shape of the cross section of the center part is approximately circular and the shape in a plane containing the x- and z-axes, i.e., the shape of the longitudinal section of the center part is approximately elliptic.

The case 620a is made of an insulating material such as a plastic such as a polyimide, a glass epoxy substrate and a quartz.

Referring to Fig. 16, a pattern A1 constituting an electrode of the attitude sensor 620 is disposed on the inner surface of the center of the case lower-half part 620d. The outer peripheral part of the pattern A1 is formed in a circular shape.

A pattern B1 is disposed on the inner surface of the center of the case lower-half part 620d on the outer peripheral side of the pattern A1. The inner peripheral part of the pattern B1 is formed in a circular shape concentric with the outer peripheral part of the pattern A1, being spaced from the outer peripheral part of the pattern A1. The outer peripheral part of the pattern B1 is formed in a circular shape concentric with the inner peripheral part of the pattern B1, being spaced from the inner peripheral part of the pattern B1. That is, the pattern B1 is ring-shaped. The width in the radial direction of the pattern B1 is configured to be approximately two to four times the diameter of the pattern A1.

A pattern C1 is disposed on the inner surface of the center of the case lower-half part 620d on the outer peripheral side of the pattern B1. The inner peripheral part of the pattern C1 is formed in a circular shape concentric with the outer peripheral part of the pattern B1, being spaced from the outer peripheral part of the pattern B1. The outer peripheral part of the pattern C1 is formed in a circular shape concentric with the inner peripheral part of the pattern C1, being spaced from the inner peripheral part of the pattern C1. That is, the pattern C1 is ring-shaped. The width in the radial direction of the pattern C1 is configured to be approximately 0.3 to 0.7 times that in the radial direction of the pattern B1.

A pattern D1 is disposed on the inner surface of the center of the case lower-half part 620d on the outer peripheral side of the pattern C1. The inner peripheral part of the pattern D1 is formed in a circular shape concentric with the outer peripheral part of the pattern C1, being spaced from the outer peripheral part of the pattern C1. The outer peripheral part of the pattern D1 is formed in a circular shape concentric with the inner peripheral part of the pattern D1, being spaced from the inner peripheral portion of the pattern D1. That is, the pattern D1 is ring-shaped. The width in the radial direction of the pattern D1 is configured to be approximately 0.8 to 1.2 times that in the radial direction of the pattern C1.

A pattern E1 is disposed on the inner surface of the center of the case lower-half part 620d on the outer peripheral side of the pattern D1. The inner peripheral part of the pattern E1 is formed in a circular shape concentric with the outer peripheral part of the pattern D1, being spaced from the outer peripheral portion of the pattern D1. The outer peripheral part of the pattern E1 is formed in a circular shape concentric with the inner peripheral part of the pattern E1, being spaced from the inner peripheral portion of the pattern E1. That is, the pattern E1 is ring-shaped. The width in the radial direction of the pattern E1 is configured to be approximately 2.0 to 2.4 times that in the radial direction of the pattern D1.

A pattern F1 is disposed on the inner surface of the center of the case lower-half part 620d on the outer peripheral side of the pattern E1. The inner peripheral part of the pattern F1 is formed in a circular shape concentric with the outer peripheral part of the pattern E1, being spaced from the outer peripheral portion of the pattern E1. The outer peripheral part of the pattern F1 is formed in a circular shape concentric with the inner peripheral part of the pattern F1, being spaced from the inner peripheral portion of the pattern F1. That is, the pattern F1 is ring-shaped. The width in the radial direction of the pattern E1 is configured to be approximately 0.6 to 1.0 times that in the radial direction of the pattern E1.

As similar to the shapes of the patterns A1, B1, C1, D1, E1 and F1 of the case lower-half part 620d, patterns A2, B2, C2, D2, E2 and F2 are formed on the case upper-half part 620u. That is, the outer peripheral part of the pattern A2 is formed in a circular shape and the patterns B2, C2, D2, E2 and F2 are ring-shaped. Then, the shapes of the patterns A1, B1, C1, D1, E1 and F1 of the. case lower-half part 620d are almost the same as the shapes of the patterns A2, B2, C2, D2, E2 and F2 of the case upper-half part 620u, respectively.

As described above, the respective patterns A1, B1, C1, D1, E1, F1, A2, B2, C2, D2 E2 and F2 are insulated each other.

In the embodiment of the mechanical watch with the attitude sensor of the invention, the attitude sensor 620 is disposed with respect to the main plate 102 so that the x- and y-axes run in parallel to the front surface of the main plate 102 and in parallel to the front surface of the dial 104. Accordingly, the attitude sensor 620 is configured with respect to the main plate 102 so that the z-axis runs vertical to the front surface of the main plate 102 and vertical to the front surface of the dial 104.

As similar to the lead wires shown in Fig. 10, lead wires (not shown) for transmitting signals from the patterns are connected to the respective patterns A1, B1, C1, D1, E1, F1, A2, B2, C2, D2, E2 and F2.

Referring to Fig. 16, a conductive fluid 628 is housed in the case 620a. The conductive fluid 628 is a mercury, for instance. In the example shown in Fig. 16, the volume of the conductive fluid 628 is 1/63 of that of the case 620a but it is preferably 1/80 to 1/40 of that of the case 620a. The volume of the conductive fluid 628 is defined so that the conductive fluid 628 is allowed to come into contact with two or three patterns.

In the horizontal state shown in Fig. 16, the conductive fluid 628 is in contact with the pattern A1 and the pattern B1. Thus, in the state shown in Fig. 16, the pattern A1 and the pattern B1 are short-circuited by the conductive fluid 628 (that is, they are conducted each other).

That is, Fig. 16 shows the state of the attitude sensor 620 when the mechanical watch with the attitude sensor of the invention is disposed in the "flat attitude".

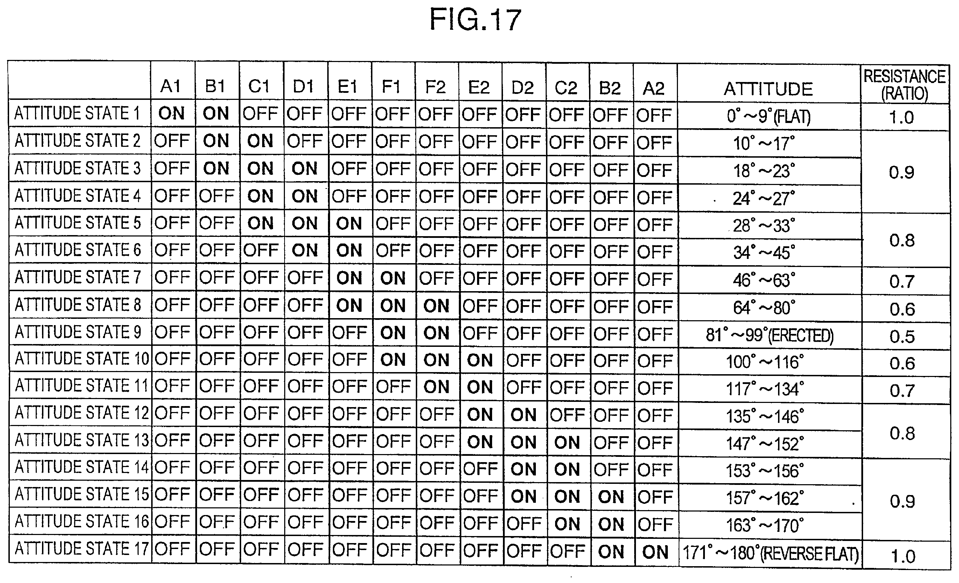

Referring to Fig. 17, in the second embodiment of the attitude sensor of the invention, the relationship between the various pattern-to-pattern conducted states and the values of the resistances disposed in the circuit is shown.

The items and the contents listed in Fig. 17 are the same as the items and the contents listed in Fig. 13 set forth.

### (5.1) Attitude State 1

An attitude state 1 shown in Fig. 17 corresponds to the case of the mechanical watch with the attitude sensor of he invention being in the "flat attitude".

The attitude state 1 corresponds to the case of the mechanical watch with the attitude sensor of the invention being in the range of 0 degree to 9 degrees with respect to the horizontal plane.

In the attitude state 1, the circuit block 606 is configured in which the pattern A1 and the pattern B1 are conducted each other and the resistance R1 is serially connected to the pattern A1 and the pattern B1. Then, in the attitude state 1, the resistance R1 is configured to be connected in series to the four coils 180, 180a, 180b and 180c by the wiring pattern. The value of the resistance R1 at this time is to be a reference value Rref (ohm)).

For example, when a combined resistance value of the four coils 180, 180a, 180b and 180c is set 1.7 kilohm, the reference value Rref is 1.2 kilohm.

### (5.2) Attitude State 2

An attitude state 2 shown in Fig. 17 corresponds to the case of the mechanical watch with the attitude sensor of the invention being in the range of 10 degrees to 17 degrees with respect to the horizontal plane.

In the attitude state 2, the circuit block 606 is configured in which the pattern B1 and the pattern C1 are conducted each other and the resistance R2 is serially connected to the pattern B1 and the pattern C1. Then, in the attitude state 2, the resistance R2 is configured to be connected in series to the four coils 180, 180a, 180b and 180c by the wiring pattern. The value of the resistance R2 at this time is configured to become 0.9 times the reference value Rref (ohm) (that is, 0.9 × Rref).

### (5.3) Attitude State 3

An attitude state 3 shown in Fig. 17 corresponds to the case of the mechanical watch with the attitude sensor of the invention being in the range of 18 degrees to 23 degrees with respect to the horizontal plane.

In the attitude state 3, the pattern B1, the pattern C1 and the pattern D1 are conducted each other and the resistance R2 is serially connected with the pattern B1, the pattern C1 and the pattern D1 in the circuit block 606. Then, in the attitude state 3, the resistance R2 is configures to be connected in series to the four coils 180, 180a, 180b and 180c by the wiring pattern.

### (5.4) Attitude State 4

An attitude state 4 shown in Fig. 17 corresponds to the case of the mechanical watch with the attitude sensor of the invention being in the range of 24 degrees to 27 degrees with respect to the horizontal plane.

In the attitude state 4, the circuit block 606 is configured in which the pattern C1 and the pattern D1 are conducted each other and the resistance R2 is serially connected to the pattern C1 and the pattern D1. Then, in the attitude state 4, the resistance R2 is configured to be connected in series to the four coils 180, 180a, 180b and 180c by the wiring pattern.

### (5.5) Attitude State 5

An attitude state 5 shown in Fig. 17 corresponds to the case of the mechanical watch with the attitude sensor of the invention being in the range of 28 degrees to 33 degrees with respect to the horizontal plane.

In the attitude state 5, the circuit block 606 is configured in which the pattern C1, the pattern D1 and the pattern E1 are conducted each other and the resistance R3 is serially connected to the pattern C1, the pattern D1 and the pattern E1. Then, in the attitude state 5, the resistance R3 is configured to be connected in series to the four coils 180, 180a, 180b and 180c by the wiring pattern. The value of the resistance R3 at this time is configured to become 0.8 times the reference value Rref (ohm) (that is, 0.8 × Rref).

### (5.6) Attitude State 6

An attitude state 6 shown in Fig. 17 corresponds to the case of the mechanical watch with the attitude sensor of the invention being in the range of 34 degrees to 45 degrees with respect to the horizontal plane.

In the attitude state 6, the circuit block 606 is configured in which the pattern D1 and the pattern E1 are conducted each other and the resistance R3 is serially connected to the pattern D1 and the pattern E1. Then, in the attitude state 5, the resistance R3 is configured to be connected in series to the four coils 180, 180a, 180b and 180c by the wiring pattern.

### (5.7) Attitude State 7

An attitude state 7 shown in Fig. 17 corresponds to the case of the mechanical watch with the attitude sensor of the invention being in the range of 46 degrees to 63 degrees with respect to the horizontal plane.

In the attitude state 7, the circuit block 606 is configured in which the pattern E1 and the pattern F1 are conducted each other and a resistance R4 is serially connected to the pattern E1 and the pattern F1. Then, in the attitude state 7, the resistance R4 is configured to be connected in series to the four coils 180, 180a, 180b and 180c by the wiring pattern. The value of the resistance R4 at this time is configured to become 0.7 times the reference value Rref (ohm) (that is, 0.7 × Rref).

### (5.8) Attitude State 8

An attitude state 8 shown in Fig. 17 corresponds to the case of the mechanical watch with the attitude sensor of the invention being in the range of 64 degrees to 80 degrees with respect to the horizontal plane.

In the attitude state 8, the circuit block 606 is configured in which the pattern E1, the pattern F1 and the pattern F2 are conducted each other and a resistance R5 is serially connected to the pattern E1, pattern F1 and pattern F2. Then, in the attitude state 8, the resistance R5 is configured to be connected in series to the four coils 180, 180a, 180b and 180c by the wiring pattern. The value of the resistance R5 at this time is configured to become 0.6 times the reference value Rref (ohm) (that is, 0.6 × Rref).

### (5.9) Attitude State 9

An attitude state 9 shown in Fig. 17 corresponds to the case of the mechanical watch with the attitude sensor of the invention being in the "erected attitude".

The attitude state 9 corresponds to the state of the mechanical watch with the attitude sensor of the invention being in the range of 81 degrees to 99 degrees with respect to the horizontal plane.

In the attitude state 9, the circuit block 606 is configured in which the pattern F1 and the pattern F2 are conducted each other and a resistance R6 is serially connected to the pattern F1 and the pattern F2. Then, in the attitude state 9, the resistance R6 is configured to be connected in series to the four coils 180, 180a, 180b and 180c by the wiring pattern. The value of the resistance R6 at this time is configured to become 0.5 times the reference value Rref (ohm) (that is, 0.5 × Rref).

### (5.10) Attitude State 10

An attitude state 10 shown in Fig. 17 corresponds to the case of the mechanical watch with the attitude sensor of the invention being in the range of 100 degrees to 116 degrees with respect to the horizontal plane.

In the attitude state 10, the circuit block 606 is configured in which the pattern F1, the pattern F2 and the pattern E2 are conducted each other and the resistance R5 is serially connected to the pattern F1, the pattern F2 and the pattern E2. Then, in the attitude state 10, the resistance R5 is configured to be connected in series to the four coils 180, 180a, 180b and 180c by the wiring pattern.

### (5.11) Attitude State 11

An attitude state 11 shown in Fig. 17 corresponds to the case of the mechanical watch with the attitude sensor of the invention being in the range of 117 degrees to 134 degrees with respect to the horizontal plane.

In the attitude state 11, the circuit block 606 is configured in which the pattern F2 and the pattern E2 are conducted each other and the resistance R4 is serially connected to the pattern F2 and pattern E2. Then, in the attitude state 11, the resistance R4 is configured to be connected in series to the four coils 180, 180a, 180b and 180c by the wiring pattern.

### (5.12) Attitude State 12

An attitude state 12 shown in Fig. 17 corresponds to the case of the mechanical watch with the attitude sensor of the invention being in the range of 135 degrees to 146 degrees with respect to the horizontal plane.

In the attitude state 12, the circuit block 606 is configured in which the pattern E2 and the pattern D2 are conducted each other and the resistance R3 is serially connected to the pattern E2 and the pattern D2. Then, in the attitude state 12, the resistance R3 is configured to be connected in series to the four coils 180, 180a, 180b and 180c by the wiring pattern.

### (5.13) Attitude State 13

An attitude state 13 shown in Fig. 17 corresponds to the case of the mechanical watch with the attitude sensor of the invention being in the range form 147 degrees to 152 degrees with respect to the horizontal plane.

In the attitude state 13, the circuit block 606 is configured in which the pattern E2, the pattern D2 and the pattern C2 are conducted each other and the resistance R3 is serially connected to the pattern E2, the pattern D2 and the pattern C2. Then, in the attitude state 13, the resistance R3 is configured to be connected in series to the four coils 180, 180a, 180b and 180c by the wiring pattern.

### (5.14) Attitude State 14

An attitude state 14 shown in Fig. 17 corresponds to the case of the mechanical watch with the attitude sensor of the invention being in the range of 153 degrees to 156 degrees with respect to the horizontal plane.

In the attitude state 14, the circuit block 606 is configured in which the pattern D2 and the pattern C2 are conducted each other and the resistance R2 is serially connected to the pattern D2 and the pattern C2. Then, in the attitude state 14, the resistance R2 is configured to be connected in series to the four coils 180, 180a, 180b and 180c by the wiring pattern.

### (5.15) Attitude State 15

An attitude state 15 shown in Fig. 17 corresponds to the case of the mechanical watch with the attitude sensor of the invention being in the range of 157 degrees to 162 degrees with respect to the horizontal plane.

In the attitude state 15, the circuit block 606 is configured in which the pattern D2, the pattern C2 and the pattern B2 are conducted each other and the resistance R2 is serially connected to the pattern D2, the pattern C2 and the pattern B2. Then, in the attitude state 15, the resistance R2 is configured to be connected in series to the four coils 180, 180a, 180b and 180c by the wiring pattern.

### (5.16) Attitude State 16

An attitude state 16 shown in Fig. 17 corresponds to the case of the mechanical watch with the attitude sensor of the invention being in the range of 163 degrees to 170 degrees with respect to the horizontal plane.

In the attitude state 16, the circuit block 606 is configured in which the pattern C2 and the pattern B2 are conducted each other and the resistance R2 is serially connected to the pattern C2 and the pattern B2. Then, in the attitude state 16, the resistance R2 is configured to be connected in series to the four coils 180, 180a, 180b and 180c by the wiring pattern.

### (5.17) Attitude State 17

An attitude state 17 shown in Fig. 17 corresponds to the case of the mechanical watch with the attitude sensor of the invention being in the "reverse flat attitude".

The attitude state 17 corresponds to the case of the mechanical watch with the attitude sensor of the invention being in the range of 171 degrees to 180 degrees with respect to the horizontal plane.

In the attitude state 17, the circuit block 606 is configured in which the pattern B2 and the pattern A2 are conducted each other and the resistance R1 is serially connected to the pattern B2 and the pattern A2. Then, in the attitude state 17, the resistance R1 is configured to be connected in series to the four coils 180, 180a, 180b and 180c by the wiring pattern. The value of the resistance R1 at this time is configured to become the reference value Rref (ohm).

### (6) Third Embodiment of the Attitude Sensor

Next, in the embodiment of the mechanical watch with the attitude sensor of the invention, a third embodiment of the attitude sensor of the invention, an attitude sensor 630, will be described.

The following description will mainly explain points where the third embodiment of the attitude sensor of the invention defers from the first embodiment of the attitude sensor of the invention. Accordingly, the points except the contents described below will be applied to the description of the first embodiment of the attitude sensor of the invention mentioned above.

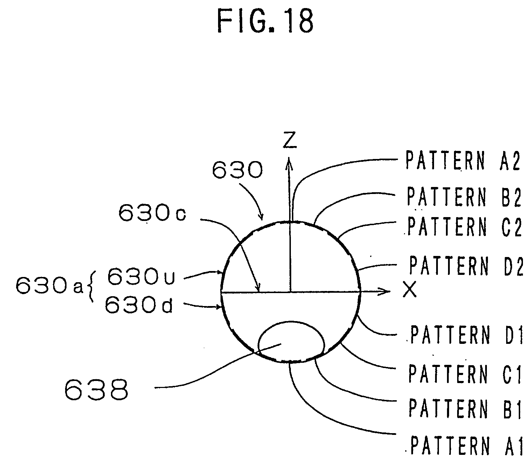

Referring to Fig. 18, the attitude sensor 630 has a case 630a in which the shape seen from the top is approximately circular and the shape seen from the side, i.e., the shape of the longitudinal section of the center part is nearly circular. Thus, the shape of the case 630a is almost spherical.

In Fig. 18, an x-axis (the right direction is to be the positive direction in Fig. 18) and a y-axis (the direction vertical to the paper surface and heading from the front to the back of the paper surface is to be the positive direction in Fig. 18) are defined in the horizontal direction. A z-axis (the upper direction is to be the positive direction in Fig.18) is defined in the direction vertical to the x- and y-axes.

Here, the "circular" includes a geometrically circular shape and includes such a shape that is nearly a perfect circle and has a thickness in the z-axis direction slightly different from that in the x-axis direction, includes such a shape that has a thickness in the z-axis direction slightly different from that in the y-axis direction and includes such a shape that has a thickness in the x-axis direction slightly different from that in the x-axis direction.

The case 630a is formed symmetrically in the vertical direction with respect to a center plane 630c. That is, the case 630a includes a case upper-half part 630u and a case lower-half part 630d. Therefore, the case 630a is formed in which the case upper-half part 630u and the case lower-half part 630d are symmetrical with respect to the center plane 630c. That is, the case upper-half part 630u and the case lower-half part 630d are formed to have the same dimensions and the same shape.

In this manner, the case 630a is formed to have the shape being approximately spherical and thereby the small-sized, low-profile attitude sensor 630 can be realized.

The case 630a is made of an insulating material such as a plastic such as a polyimide, a glass epoxy substrate and a quartz.

Referring to Fig. 18, a pattern A1 constituting an electrode of the attitude sensor 630 is disposed on the inner surface of the center of the case lower-half part 630d. The outer peripheral part of the pattern A1 is formed in a circular shape.

A pattern B1 is disposed on the inner surface of the center of the case lower-half part 630d on the outer peripheral side of the pattern A1. The inner peripheral part of the pattern B1 is formed in a circular shape concentric with the outer peripheral part of the pattern A1, being spaced from the outer peripheral part of the pattern A1. The outer peripheral part of the pattern B1 is formed in a circular shape concentric with the inner peripheral part of the pattern B1, being spaced from the inner peripheral part of the pattern B1. That is, the pattern B1 is ring-shaped. The width in the radial direction of the pattern B1 is configured to be approximately 0.7 to 1.3 times the diameter of the pattern A1.

A pattern C1 is disposed on the inner surface of the center of the case lower-half part 620d on the outer peripheral side of the pattern B1. The inner peripheral part of the pattern C1 is formed in a circular shape concentric with the outer peripheral part of the pattern B1, being spaced from the outer peripheral part of the pattern B1. The outer peripheral part of the pattern C1 is formed in a circular shape concentric with the inner peripheral part of the pattern C1, being spaced from the inner peripheral part of the pattern C1. That is, the pattern C1 is ring-shaped. The width in the radial direction of the pattern C1 is configured to be approximately 1.3 to 2.0 times that in the radial direction of the pattern B1.

A pattern D1 is disposed on the inner surface of the center of the case lower-half part 630d on the outer peripheral side of the pattern C1. The inner peripheral part of the pattern D1 is formed in a circular shape concentric with the outer peripheral part of the pattern C1, being spaced from the outer peripheral part of the pattern C1. The outer peripheral part of the pattern D1 is formed in a circular shape concentric with the inner peripheral part of the pattern D1, being spaced from the inner peripheral portion of the pattern D1. That is, the pattern D1 is ring-shaped. The width in the radial direction of the pattern D1 is configured to be approximately 0.8 to 1.2 times that in the radial direction of the pattern C1.

As similar to the shapes of the patterns A1, B1, C1 and D1 of the case lower-half part 630d, patterns A2, B2, C2 and D2 are formed on the case upper-half part 630u. That is, the outer peripheral part of the pattern A2 is formed in a circular shape and the patterns B2, C2 and D2 are ring-shaped. Then, the shapes of the patterns A1, B1, C1 and D1 of the case lower-half part 630d are almost the same as the shapes of the patterns A2, B2, C2 and D2 of the case upper-half part 630u, respectively.

As described above, the respective patterns A1, B1, C1, D1, A2, B2, C2 and D2 are insulated each other.

In the embodiment of the mechanical watch with the attitude sensor of the invention, the attitude sensor 630 is disposed with respect to the main plate 102 so that the x- and y-axes run in parallel to the front surface of the main plate 102 and in parallel to the front surface of the dial 104. Accordingly, the attitude sensor 630 is configured with respect to the main plate 102 so that the z-axis runs vertical to the front surface of the main plate 102 and vertical to the front surface of the dial 104.

As similar to the lead wires shown in Fig. 10, lead wires (not shown) for transmitting signals from the patterns are connected to the respective patterns A1, B1, C1, D1, A2, B2, C2 and D2.

Referring to Fig. 18, a conductive fluid 638 is housed in the case 630a. The conductive fluid 638 is a mercury, for instance. In the example shown in Fig. 18, the volume of the conductive fluid 638 is 1/6.5 of that of the case 630a but it is preferably 1/3 to 1/10 of that of the case 630a. The volume of the conductive fluid 638 is defined so that the conductive fluid 638 is allowed to come into contact with two or three patterns.

In the horizontal state shown in Fig. 18, the conductive fluid 638 is in contact with the pattern A1 and the pattern B1. Thus, in the state shown in Fig. 18, the pattern A1 and the pattern B1 are short-circuited by the conductive fluid 638 (that is, they are conducted each other).

That is, Fig. 18 shows the state of the attitude sensor 630 when the mechanical watch with the attitude sensor of the invention is disposed in the "flat attitude".

As similar to Fig. 17, in the third embodiment of the attitude sensor of the invention, the relationship between the various pattern-to-pattern conducted states and the values of the resistances disposed in the circuit can be set (not shown).

The items and contents listed in Fig. 13 are the same as the items and contents listed in Fig. 13 set forth.

### (6.1) Attitude State 1

An attitude state 1 shown in Fig. 18 corresponds to the case of the mechanical watch with the attitude sensor of the invention being in the "flat attitude".

The attitude state 1 corresponds to the case of the mechanical watch with the attitude sensor of the invention being disposed horizontally.

In the attitude state 1, the circuit block 606 is configured in which the pattern A1 and the pattern B1 are conducted each other and the resistance R1 is serially connected to the pattern A1 and the pattern B1. Then, in the attitude state 1, the resistance R1 is configured to be connected in series to the four coils 180, 180a, 180b and 180c by the wiring pattern. The value of the resistance R1 at this time is to be a reference value Rref (ohm).

For example, when a combined resistance value of the four coils 180, 180a, 180b and 180c is set 1.7 kilohm, the reference value Rref is 1.2 kilohm.

### (6.2) Attitude State 2

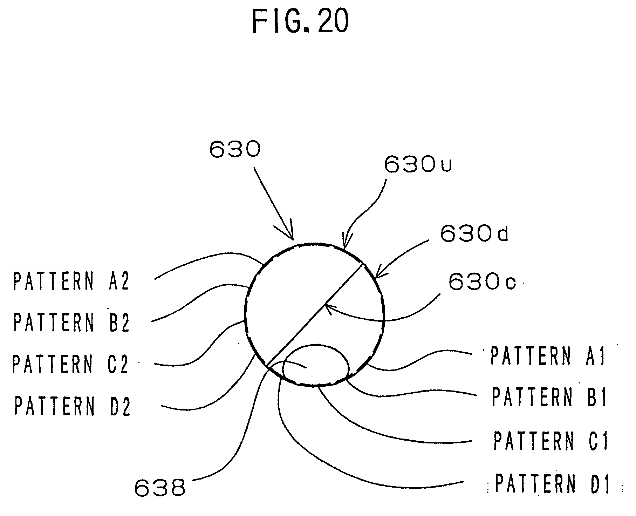

An attitude state 2 shown in Fig. 20 corresponds to the case of the mechanical watch with the attitude sensor of the invention being in the "slanted attitude".

The attitude state 2 corresponds to the case of the mechanical watch with the attitude sensor of the invention being disposed forming an angle of 45 degrees with respect to the horizontal plane.

In the attitude state 2, the circuit block 606 is configured in which the pattern B1, the pattern C1 and the pattern D1 are conducted each other and the resistance R2 is serially connected to the pattern B1, the pattern C1 and the pattern D1. Then, in the attitude state 2, the resistance R2 is configured to be connected in series to the four coils 180, 180a, 180b and 180c by the wiring pattern. The value of the resistance R2 at this time is configured to become 0.75 times the reference value Rref (ohm) (that is, 0.75 × Rref).

### (6.3) Attitude State 3

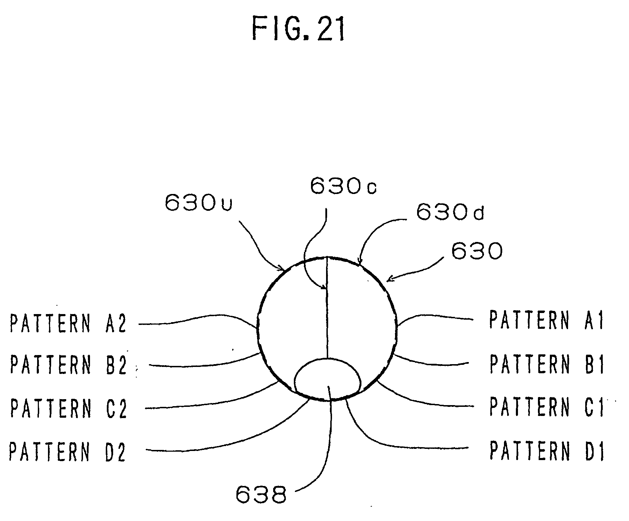

An attitude state 3 shown in Fig. 21 corresponds to the case of the mechanical watch with the attitude sensor of the invention being in the "erected attitude".

The attitude state 3 corresponds to the case of the mechanical watch with the attitude sensor of the invention being disposed vertically.

In the attitude state 3, the circuit block 606 is configured in which the pattern D1 and the pattern D2 are conducted each other and the resistance R3 is serially connected to the pattern D1 and the pattern D2. Then, in the attitude state 3, the resistance R3 is configures to be connected in series to the four coils 180, 180a, 180b and 180c by the wiring pattern. The value of the resistance R3 at this time is configured to become 0.5 times the reference value Rref (ohm) (that is, 0.5 × Rref).

### (7) Fourth Embodiment of the Attitude Sensor

Next, in the embodiment of the mechanical watch with the attitude sensor of the invention, a fourth embodiment of the attitude sensor of the invention, an attitude sensor 640, will be described.

The following description will mainly explain points where the fourth embodiment of the attitude sensor of the invention defers from the first embodiment of the attitude sensor of the invention. Accordingly, the points except the contents described below will be applied to the description of the first embodiment of the attitude sensor of the invention mentioned above.

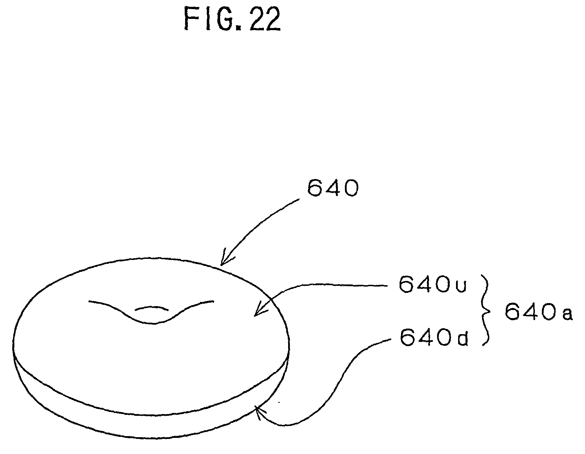

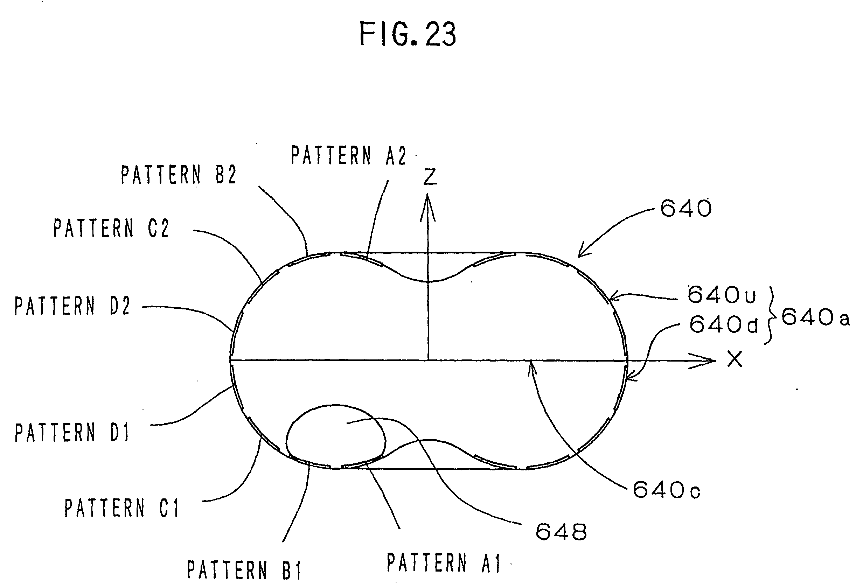

Referring to Figs. 22 and 23, the attitude sensor 640 has a case 640a in which the shape seen from the top is approximately circular and the shape seen from the side, i.e., the shape of the longitudinal section of the center part is nearly "oblong" and has a neck part near the center thereof. That is, the shape of the case 640a seen from the side, i.e., the shape of the longitudinal section of the center part is a so-called "cocoon shape".

The case 640a is formed symmetrically in the vertical direction with respect to a center plane 640c. That is, the case 640a includes a case upper-half part 640u and a case lower-half part 640d. Therefore, the case 640a is formed in which the case upper-half part 640u and the case lower-half part 640d are symmetrical with respect to the center plane 640c. That is, the case upper-half part 640u and the case lower-half part 640d are formed to have the same dimensions and the same shape.

In this manner, the case 640a is formed to have the cross-sectional shape seen from the side being approximately cocoon-shaped and thereby the small-sized, low-profile attitude sensor 640 can be realized.

In Fig. 23, an x-axis (the right direction is to be the positive direction in Fig. 23) and a y-axis (the direction vertical to the paper surface and heading from the front to the back of the paper surface is to be the positive direction in Fig. 23) are defined in the horizontal direction. A z-axis (the upper direction is to be the positive direction in Fig.23) is defined in the direction vertical to the x- and y-axes.

In the case 640a, the shape in a plane containing the x- and y-axes, i.e., the shape of the cross section of the center part is almost circular and the shape in a plane containing the x- and z-axes, i.e., the shape of the longitudinal section of the center part is nearly cocoon-shaped.

The case 640a is made of an insulating material such as a plastic such as a polyimide, a glass epoxy substrate and a quartz.

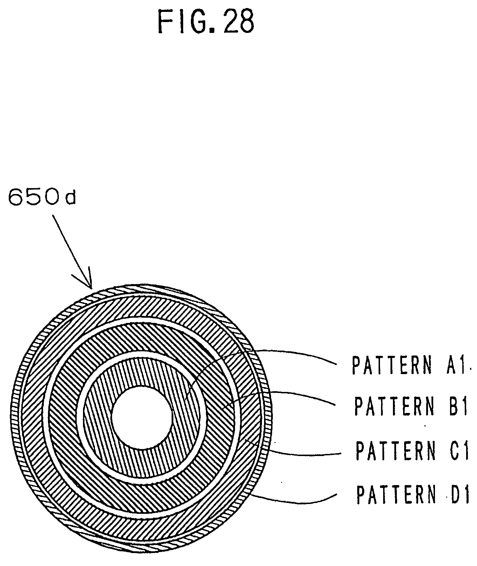

Referring to Figs. 23 and 28, a pattern A1 constituting the electrode of the attitude sensor 640 is disposed at the inner surface on the outside of the neck part in the center of the case lower-half part 640d. The pattern A1 is formed in a ring shape.

A pattern B1 is disposed on the inner surface of the center of the case lower-half part 640d on the outer peripheral side of the pattern A1. The inner peripheral part of the pattern B1 is formed in a circular shape concentric with the outer peripheral part of the pattern A1, being spaced from the outer peripheral part of the pattern A1. The outer peripheral part of the pattern B1 is formed in a circular shape concentric with the inner peripheral part of the pattern B1, being spaced from the inner peripheral part of the pattern B1. That is, the pattern B1 is ring-shaped. The width in the radial direction of the pattern B1 is configured to be approximately 0.7 to 1.3 times the diameter of the pattern A1.

A pattern C1 is disposed on the inner surface of the center of the case lower-half part 640d on the outer peripheral side of the pattern B1. The inner peripheral part of the pattern C1 is formed in a circular shape concentric with the outer peripheral part of the pattern B1, being spaced from the outer peripheral part of the pattern B1. The outer peripheral part of the pattern C1 is formed in a circular shape concentric with the inner peripheral part of the pattern C1, being spaced from the inner peripheral part of the pattern C1. That is, the pattern C1 is ring-shaped. The width in the radial direction of the pattern C1 is configured to be approximately 0.7 to 1.3 times that in the radial direction of the pattern B1.

A pattern D1 is disposed on the inner surface of the center of the case lower-half part 640d on the outer peripheral side of the pattern C1. The inner peripheral part of the pattern D1 is formed in a circular shape concentric with the outer peripheral part of the pattern C1, being spaced from the outer peripheral part of the pattern C1. The outer peripheral part of the pattern D1 is formed in a circular shape concentric with the inner peripheral part of the pattern D1, being spaced from the inner peripheral portion of the pattern D1. That is, the pattern D1 is ring-shaped. The width in the radial direction of the pattern D1 is configured to be approximately 0.7 to 1.3 times that in the radial direction of the pattern C1.

As similar to the shapes of the patterns A1, B1, C1 and D1 of the case lower-half part 640d, patterns A2, B2, C2 and D2 are formed on the case upper-half part 640u. That is, the patterns A2, B2, C2 and D2 are formed in a ring shape. Then, the shapes of the patterns A1, B1, C1 and D1 of the case lower-half part 640d are almost the same as the shapes of the patterns A2, B2, C2 and D2 of the case upper-half part 640u, respectively.

As described above, the respective patterns A1, B1, C1, D1, A2, B2, C2 and D2 are insulated each other.

In the embodiment of the mechanical watchwith the attitude sensor of the invention, the attitude sensor 640 is disposed with respect to the main plate 102 so that the x- and y-axes run in parallel to the front surface of the main plate 102 and in parallel to the front surface of the dial 104. Accordingly, the attitude sensor 640 is configured with respect to the main plate 102 so that the z-axis runs vertical to the front surface of the main plate 102 and vertical to the front surface of the dial 104.

As similar to the lead wires shown in Fig. 10, lead wires (not shown) for transmitting signals from the patterns are connected to the respective patterns A1, B1, C1, D1, A2, B2, C2 and D2.

Referring to Fig. 23, a conductive fluid 648 is housed in the case 640a. The conductive fluid 628 is a mercury, for instance. In the example shown in Fig. 23, the volume of the conductive fluid 648 is 1/27 of that of the case 640a but it is preferably 1/50 to 1/10 of that of the case 640a. The volume of the conductive fluid 648 is defined so that the conductive fluid 648 is allowed to come into contact with two or three patterns.

In the horizontal state shown in Fig. 23, the conductive fluid 648 is in contact with the pattern A1 and the pattern B1. Thus, in the state shown in Fig. 23, the pattern A1 and the pattern B1 are short-circuited by the conductive fluid 648 (that is, they are conducted each other).

That is, Fig. 23 shows the state of the attitude sensor 640 when the mechanical watch with the attitude sensor of the invention is disposed in the "flat attitude".

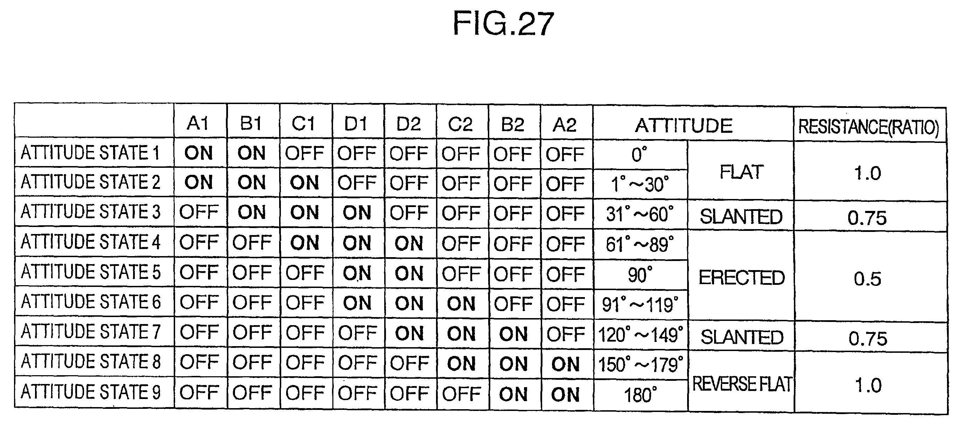

Referring to Fig. 27, in the fourth embodiment of the attitude sensor of the invention, the relationship between the various pattern-to-pattern conducted states and the values of the resistance disposed in the circuit is shown.

The items and the contents listed in Fig. 27 are the same as the items and the contents listed in Fig. 13 set forth.

### (7.1) Attitude State 1

An attitude state 1 shown in Fig. 27 corresponds to the case of the mechanical watch with the attitude sensor of the invention being in the "flat attitude".

The attitude state 1 corresponds to the case of the mechanical watch with the attitude sensor of the invention being disposed at almost zero degree with respect to the horizontal plane.

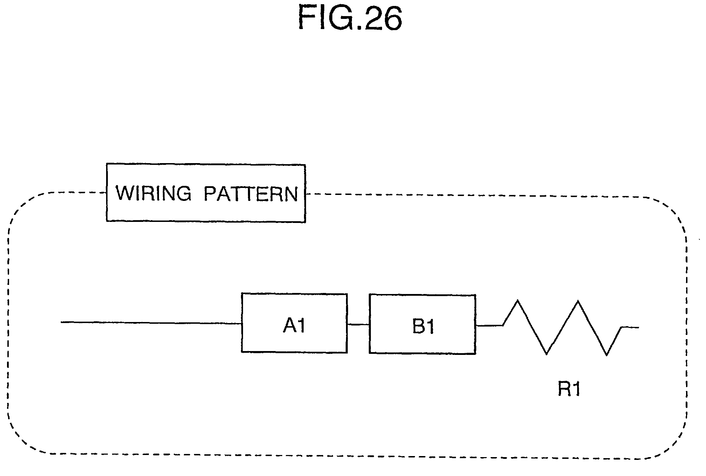

In the attitude state 1, as shown in Fig. 26, the circuit block 606 is configured in which the pattern A1 and the pattern B1 are conducted each other and the resistance R1 is serially connected to the pattern A1 and the pattern B1. Then, in the attitude state 1, the resistance R1 is configured to be connected in series to the four coils 180, 180a, 180b and 180c by the wiring pattern. The value of the resistance R1 at this time is to be a reference value Rref (ohm).

For example, when a combined resistance value of the four coils 180, 180a, 180b and 180c is set 1.7 kilohm, the reference value Rref is 1.2 kilohm.

### (7.2) Attitude State 2

An attitude state 2 shown in Fig. 27 corresponds to the case of the mechanical watch with the attitude sensor of the invention being in the range of 1 degree to 30 degrees with respect to the horizontal plane.

In the attitude state 2, the circuit block 606 is configured in which the pattern A1, the pattern B1 and the pattern C1 are conducted each other and the resistance R1 is serially connected to the pattern A1, the pattern B1 and the pattern C1. Then, in the attitude state 2, the resistance R1 is configured to be connected in series to the four coils 180, 180a, 180b and 180c by the wiring pattern. The value of the resistance R1 at this time is configured to become equal to the reference value Rref (ohm).

### (7.3) Attitude State 3

An attitude state 3 shown in Fig. 27 corresponds to the case of the mechanical watch with the attitude sensor of the invention being in the range of 31 degrees to 60 degrees with respect to the horizontal plane.

In the attitude state 3, the circuit block 606 is configured in which the pattern B1, the pattern C1 and the pattern D1 are conducted each other and the resistance R2 is serially connected to the pattern B1, the pattern C1 and the pattern D1. Then, in the attitude state 3, the resistance R2 is configures to be connected in series to the four coils 180, 180a, 180b and 180c by the wiring pattern.

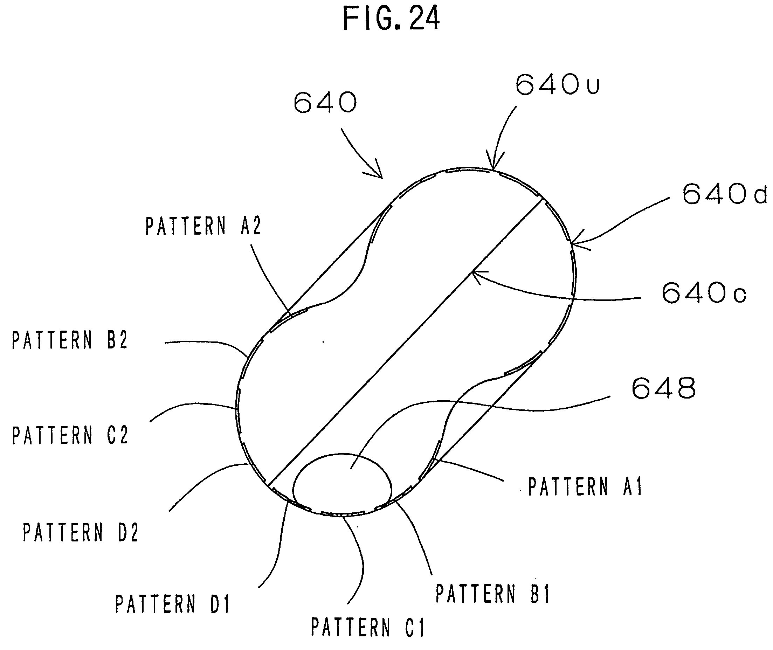

Fig. 24 shows the attitude sensor 640 when the mechanical watch with the attitude sensor of the invention is disposed to form 45 degrees with respect to the horizontal plane.

### (7.4) Attitude State 4

An attitude state 4 shown in Fig. 27 corresponds to the case of the mechanical watch with the attitude sensor of the invention being in the range of 61 degrees to 89 degrees with respect to the horizontal plane.

In the attitude state 4, the circuit block 606 is configured in which the pattern C1, the pattern D1 and the pattern D2 are conducted each other and the resistance R3 is serially connected to the pattern C1, the pattern D1 and the pattern D2. Then, in the attitude state 5, the resistance R3 is configures to be connected in series to the four coils 180, 180a, 180b and 180c by the wiring pattern. The value of resistance R3 at this time is configured to become 0.5 times the reference value Rref (ohm) (that is, 0.5 × Rref).

### (7.5) Attitude State 5

An attitude state 5 shown in Fig. 27 corresponds to the case of the mechanical watch with the attitude sensor of the invention being disposed vertically.

In the attitude state 5, the circuit block 606 is configured in which the pattern D1 and the pattern D2 are conducted each other and the resistance R3 is serially connected to the pattern C1, the pattern D1 and the pattern D2. Then, in the attitude state 5, the resistance R3 is configures to be connected in series to the four coils 180, 180a, 180b and 180c by the wiring pattern. The value of the resistance R3 at this time is configured to become 0.5 times the reference value Rref (ohm) (that is, 0.5 × Rref).

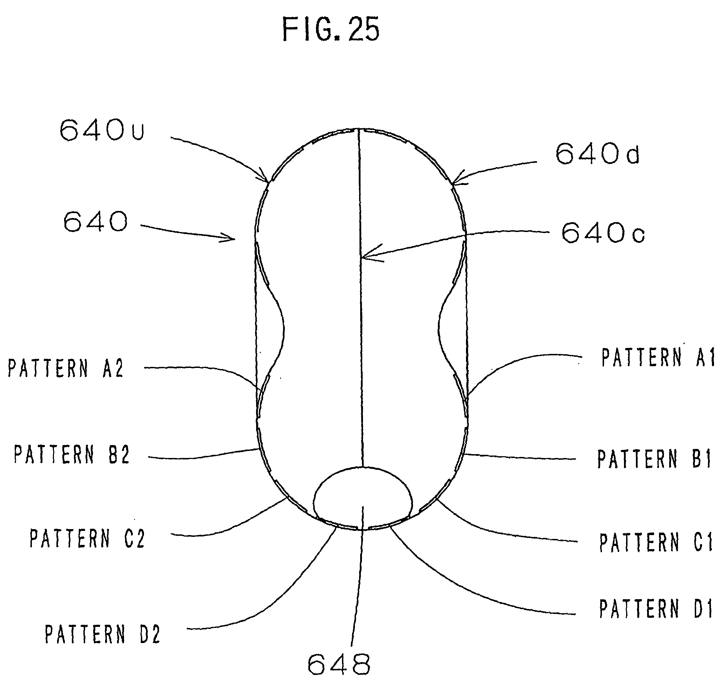

Fig. 25 shows the attitude sensor 640 when the mechanical watch with the attitude sensor of the invention is disposed vertically.

### (7.6) Attitude State 6

An attitude state 6 shown in Fig. 27 corresponds to the case of the mechanical watch with the attitude sensor of the invention being in the range of 91 degrees to 119 degrees with respect to the horizontal plane.

In the attitude state 6, the circuit block 606 is configured in which the pattern D1, the pattern D2 and the pattern C2 are conducted each other and the resistance R3 is serially connected to the pattern D1, the pattern D2 and the pattern C2. Then, in the attitude state 6, the resistance R3 is configures to be connected in series to the four coils 180, 180a, 180b and 180c by the wiring pattern.

### (7.7) Attitude State 7

An attitude state 7 shown in Fig. 27 corresponds to the state of the mechanical watch with the attitude sensor of the invention being in the range of 120 to 149 degrees with respect to the horizontal plane.

In the attitude state 7, the circuit block 606 is configured in which the pattern D2, the pattern C2 and the pattern B2 are conducted each other and the resistance R2 is serially connected to the pattern D2, the pattern C2 and the pattern B2 in the circuit block 606. Then, in the attitude state 7, the resistance R2 is configures to be connected in series to the four coils 180, 180a, 180b and 180c by the wiring pattern. The value of the resistance R2 at this time is configured to become 0.75 times the reference value Rref (ohm) (that is, 0.75 × Rref).

### (7.8) Attitude State 8

An attitude state 8 shown in Fig. 27 corresponds to the case of the mechanical watch with the attitude sensor of the invention being in the range of 150 degrees to 179 degrees with respect to the horizontal plane.

In the attitude state 8, the circuit block 606 is configured in which the pattern C2, the pattern B2 and the pattern A2 are conducted each other and the resistance R1 is serially connected to the pattern C2, the pattern B2 and the pattern A2 in the circuit block 606. Then, in the attitude state 8, the resistance R1 is configures to be connected in series to the four coils 180, 180a, 180b and 180c by the wiring pattern. The value of the resistance R1 at this time is configured to become equal to the reference value Rref (ohm).

### (7.9) Attitude State 9

An attitude state 9 shown in Fig. 27 corresponds to the case of the mechanical watch with the attitude sensor of the invention being in the "reverse flat attitude".

The attitude state 9 corresponds to the case of the mechanical watch with the attitude sensor of the invention being in the range of approximately 180 degrees with respect to the horizontal plane.

In the attitude state 9, the circuit block 606 is configured in which the pattern B2 and the pattern A2 are conducted each other and the resistance R1 is serially connected to the pattern B2 and the pattern A2 in the circuit block 606. Then, in the attitude state 9, the resistance R1 is configures to be connected in series to the four coils 180, 180a, 180b and 180c by the wiring pattern. The value of the resistance R1 at this time is configured to become equal to the reference value Rref (ohm).

### (8) Fifth Embodiment of the Attitude Sensor

Next, in the embodiment of the mechanical watch with the attitude sensor of the invention, a fifth embodiment of the attitude sensor of the invention, an attitude sensor 650, will be described.

The following description will mainly explain points where the fifth embodiment of the attitude sensor of the invention defers from the first embodiment of the attitude sensor of the invention. Accordingly, the points except the contents described below will be applied to the description of the first embodiment of the attitude sensor of the invention mentioned above.

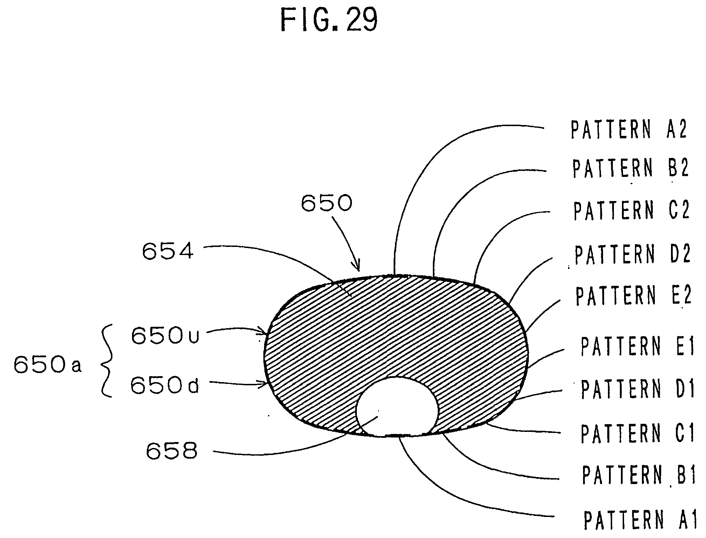

Referring to Fig.29, the attitude sensor 650 has a case 650a in which the shape seen from the top is almost circular and the shape seen from the side is nearly "oblong".

The case 650a is formed symmetrically in the vertical direction with respect to a center plane 650c. The material, the shape and the dimensions of the case 650a are the same as the case 610a.

The shapes of the patterns of the attitude sensor 650 are the same as the attitude sensor 610.

Referring to Fig. 29, the conductive fluid 658 is housed in the case 650a. The conductive fluid 658 is a mercury, for instance. In the example shown in Fig.29, the volume of the conductive fluid 658 is 1/28 of that of the case 650a but it is preferably 1/50 to 1/10 of that of the case 650a. The volume of the conductive fluid 658 is defined so that the conductive fluid 658 is allowed to come into contact with two or three patterns.

An insulating fluid 654 is housed in the case 650a. The insulating fluid 654 is housed in the entire part or a part of the remaining case 650a where the conductive fluid 658 has been housed. For example, the insulating fluid 654 is preferably an insulating oil such as a chlorinated diphenyl, a chlorinated benzene, a silicone oil or the like.

In the example shown in Fig. 29, the volume of the insulating fluid 654 is 1/1.04 of that of the case 650a but it is preferably 1/1.02 to 1/1.1 of that of the case 650a. The volume of the insulating fluid 654 is preferably 1/3 to 1/1 of the volume of the remaining case 650a where the conductive fluid 658 has been housed.

The viscosity of the insulating fluid 654 is preferably smaller than that of the conductive fluid 658.

The insulating fluid 654 is used and the viscosity of the conductive fluid 658 is made smaller than that of the insulating fluid 654. Thereby, the attitude detection can be performed quickly and surely and a hypersensitive reaction can be eliminated.

Additionally, the specific gravity of the insulating fluid 654 is configured to be smaller than that of the conductive fluid 658.

The insulating fluid 664 is used and the specific gravity of the insulating fluid 654 is made smaller than that of the conductive fluid 658. Thereby, the attitude detection can be preformed quickly and surely.

In the horizontal state shown in Fig. 29, the conductive fluid 658 is in contact with the pattern A1 and the pattern B1. Thus, in the state shown in Fig. 29, the pattern A1 and the pattern B1 are short-circuited by the conductive fluid 658 (that is, they are conducted each other).

That is, Fig. 29 shows the state of the attitude sensor 650 when the mechanical watch with the attitude sensor of the invention is disposed in the "flat attitude".

### (9) Sixth Embodiment of the Attitude Sensor

Next, in the embodiment of the mechanical watch with the attitude sensor of the invention, a sixth embodiment of the attitude sensor of the invention, an attitude sensor 660, will be described.

The following description will mainly explain points where the fifth embodiment of the attitude sensor of the invention defers fromthe first embodiment of the attitude sensor of the invention. Accordingly, the points except the contents described below will be applied to the description of the first embodiment of the attitude sensor of the invention mentioned above.

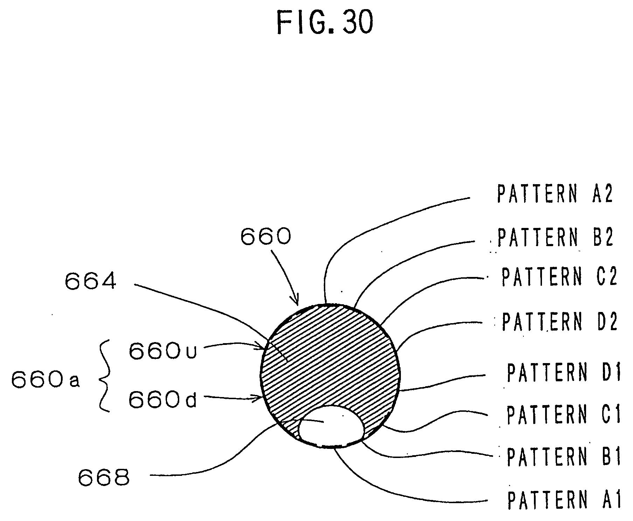

Referring to Fig. 30, the attitude sensor 660 has a case 660a in which the outside shape is almost spherical. The material, the shape and the dimensions of the case 660a are almost the same as the case 630a.

The shapes of the patterns of the attitude sensor 660 are the same as the attitude sensor 630.

A conductive fluid 668 is housed in the case 660a. The material and the volume of the conductive fluid 668 are the same as those of the conductive fluid 638.

An insulating fluid 664 is housed in the case 660a. The insulating fluid 664 is housed in the entire part or a part of the remaining case 660a where the conductive fluid 668 has been housed. For example, the insulating fluid 664 is preferably an insulating oil such as a chlorinated diphenyl, a chlorinated benzene, a silicone oil or the like.

In the example shown in Fig. 30, the volume of the insulating fluid 664 is 1/1.2 of that of the case 660a but it is preferably 1/1.1 to 1/1.5 of that of the case 660a. The volume of the insulating fluid 664 is preferably 1/3 to 1/1 of that of the remaining case 660a where the conductive fluid 668 has been housed.

The viscosity of the insulating fluid 664 is preferably smaller than that of the conductive fluid 668.

The insulating fluid 664 is used and the viscosity of the conductive fluid 668 is made smaller than that of the insulating fluid 664. Thereby, the attitude detection can be performed quickly and surely and a hypersensitive reaction can be eliminated.

Additionally, the specific gravity of the insulating fluid 664 is configured to be smaller than that of the conductive fluid 668.

The insulating fluid 664 is used and the specific gravity of the insulating fluid 664 is made smaller than that of the conductive fluid 668. Thereby, the attitude detection can be preformed quickly and surely.

In the horizontal state shown in Fig. 30, the conductive fluid 668 is in contact with the pattern A1 and the pattern B1. Thus, in the state shown in Fig. 30, the pattern A1 and the pattern B1 are short-circuited by the conductive fluid 668 (that is, they are conducted each other).

That is, Fig. 30 shows the state of the attitude sensor 660 when the mechanical watch with the attitude sensor of the invention is disposed in the "flat attitude".

Furthermore, the use of the conductive fluid is possible in all the embodiments of the attitude sensor of the invention.

### (10) Simulation on the Instantaneous Rate

Next, the result of the simulation on the instantaneous rate which was performed on the mechanical watch with the attitude sensor of the invention will be described, the attitude sensor has been developed to solve such problems of the orthodox mechanical watch.

Referring to Fig. 37, the mechanical watch with the attitude sensor of the invention is first adjusted to the state of the instantaneous rate of the watch being advanced as indicated by a thin line in Fig. 37.

In the mechanical watch with the attitude sensor of the invention, in the case that the balance wheel 140 rotates to a certain angle or above, when the outer end of the hair spring 140c comes into contact with the first contact member 168a or the second contact member 168b, the instantaneous rate further advances because the effective length of the hair spring 140c is shortened.

That is, in the mechanical watch with the attitude sensor of the invention, in the state that the outer end of the hair spring 140c does not come into contact with the first contact member 168a nor the second contact member 168b, as indicated by a thin line in Fig. 37, the rate in the flat attitude in the state of the spring being fully wound is about 23 seconds/day (it advances about 23 seconds per day). The rate in the erected attitude is about 18 seconds/day (it advances about 18 seconds per day). After 20 hours have passed from the fully wound state, the rate in the flat attitude becomes about 17 seconds/day (it advances about 17 seconds per day) and the rate in the erected attitude becomes about 13 seconds/day (it advances about 13 seconds per day). After 30 hours have passed from the fully wound state, the rate in the erected attitude becomes about minus two seconds/day (it delays about two seconds per day) and the rate in the flat attitude becomes about minus three seconds/day (it delays about three seconds per day).

In the mechanical watch with the attitude sensor of the invention, in the state that the outer end of the hair spring 140c is in contact with the first contact member 168a or the second contact member 168b, as indicated by a thicker line in Fig. 37, the instantaneous rate can maintain approximately five seconds/day (it maintains the state that it advances about five seconds per day) until after 27 hours have passed from the state of the spring being fully wound. After 30 hours have passed from the fully wound state, the instantaneous rate becomes about minus two seconds/day (it delays about two seconds per day). .

The mechanical watch with the attitude sensor of the invention suppresses the change in the instantaneous rate of the watch by controlling the swing angle of the balance wheel. Thus, when compared with the orthodox mechanical watch indicated by a thinner line in Fig. 37, elapsed time from the fully wound state in which the instantaneous rate is approximately zero to five seconds/day can be prolonged.

That is, in the mechanical watch with the attitude sensor of the invention, the duration in which the instantaneous rate has a margin within approximately plus or minus five seconds/day is approximately 32 hours. The value of this duration is approximately 1.45 times the duration, about 22 hours, in which the instantaneous rate has a margin within approximately plus or minus five seconds/day in the orthodox mechanical watch.

Accordingly, the simulation result showing that the mechanical watch with the attitude sensor of the invention is highly accurate as compared with the orthodox mechanical watch was obtained.

### (7) Effect of the Invention

As described above, the mechanical watch with the attitude sensor of the invention is configured to control the angle of rotation of the balance wheel in response to the various attitude of the mechanical watch. Accordingly, the swing angle can be hold nearly constant even when the mechanical watch is placed in any attitude.

### Industrial Applicability

The attitude sensor of the invention is small-sized and highly accurate.

Additionally, the attitude sensor of the invention is small-sized and highly accurate and thus it can be used in a machine tool, a measuring device, an image device, a recording device and the like.

Furthermore, the attitude sensor of the invention is suitable for realizing a mechanical watch having a simple structure and high accuracy.

Therefore, when the attitude sensor of the invention is applied to the mechanical watch, a mechanical watch having a simple structure and high accuracy can be realized.

Moreover, the mechanical watch with the attitude sensor of the invention is suitable for more efficiently manufacturing a small-sized, low-profile and highly accurate mechanical watch.

## Claims

1. An attitude sensor is **characterized in that** the attitude sensor comprises:
a case (610a, 620a, 630a and 640a) configured to have a shape seen from the top being circular and seen from the side including a curve;
a plurality of patterns (A1 to E2 and F2) concentrically disposed on an inner surface of the case (610a, 620a, 630a and 640a); and
a conductive fluid (608, 628, 638 and 648) housed in said case (610a, 620a, 630a and 640a).

2. The attitude sensor according to claim 1 **characterized in that** the case (610a) is configured to have a shape seen from the side being oblong.

3. The attitude sensor according to claim 1 **characterized in that** the case (620a) is configured to have a shape seen from the side being elliptic.

4. The attitude sensor according to claim 1 **characterized in that** the case (630a) is configured to have an outside shape being spherical.

5. The attitude sensor according to claim 1 **characterized in that** the case (640a) is configured to have a cross-sectional shape seen from the side being cocoon-shaped.

6. The attitude sensor according to any one of claims 1 to 5 **characterized by** comprising an insulating fluid (654 and 664) housed in said case (610a, 620a, 630a and 640a).

7. The attitude sensor according to any one of claims 1 to 6 **characterized in that** the respective the patterns of the attitude sensor include a circular pattern disposed in the center and ring-shaped patterns concentrically disposed with respect to the circular pattern.

8. The attitude sensor according to any one of claims 1 to 7 **characterized by** comprising a plurality of resistances (R1 to R6) having a different resistance value, the resistances being disposed so as to respond to a state of the conducted patterns of the attitude sensor, wherein one of said resistances (R1 to R6) is configured to be connected to the attitude sensor based on a detected result of a attitude of the attitude sensor which has been detected by said attitude sensor.

9. An attitude sensor **characterized in that** the attitude sensor comprises:
a case defining an outside shape of the attitude sensor;
a plurality of patterns disposed on an inner surface of the case;
a conductive fluid housed in said case; and
an insulating fluid housed in said case.

10. The attitude sensor according to claim 9 **characterized in that** a specific gravity of the insulating fluid housed in said case is configured to be smaller than that of the conductive fluid housed in said case.

11. The attitude sensor according to claim 9 or 10 **characterized in that** a viscosity of the insulating fluid housed in said case is configured to be smaller than that of the conductive fluid housed in said case.
